# EUROPEAN PATENT APPLICATION

(11) **EP 1 237 256 A2**
(43) Date of publication of application: **04.09.2002**
(21) Application number: 01121633.0
(22) Date of filing: 12.09.2001
(51) Int. Cl.: H02K 7/116, H02K 9/19

(54) **Drive force transmission for vehicle ac generator**

(30) Priority: 28.02.2001 JP 2001053518; 27.06.2001 JP 2001194406
(71) Applicant: Hitachi, Ltd., Chiyoda-ku, Tokyo 101-8010 (JP)
(72) Inventor: Kanazawa, Hiroshi, Hitachiohta-shi, Ibaraki 313-0012 (JP); Tahara, Kazuo, Hitachi-shi, Ibaraki 316-0032 (JP); Honda, Yoshiaki, Hitachinaka-shi, Ibaraki 312-0052 (JP); Takano, Masami, Hitachinaka-shi, Ibaraki 312-0062 (JP); Seino, Hiromitsu, Iwaki-shi, Fukushima 974-8232 (JP); Tanaka, Naoyuki, Abiko-shi, Chiba 270-1164 (JP)
(74) Representative: Beetz & Partner Patentanwälte

(57) **Abstract**

In order to provide a small sized, high speed rotation and high output vehicle use AC generation system, a vehicle use AC generator and a vehicle use AC generator use drive force transmission system which enhances output in a broad range from a low speed to a high speed, in a vehicle use AC generation system including a vehicle use AC generator coupled to a crank pulley shaft of an engine via a pulley, the vehicle use AC generator being provided with a rotor having magnetic poles and a field winding for magnetizing the magnetic poles, a stator which is disposed being spaced apart with a predetermined gap with respect to the rotor and has a stator winding for generating an AC voltage through magnetization of the magnetic poles, a first shaft to which the pulley is provided and a second shaft integral with the rotor, wherein the first shaft is disposed within the side face of the vehicle use AC generator and at a equivalent position with respect to the second shaft when seen from the crank pulley shaft or rather at the side of the crank pulley shaft from the second shaft and the first shaft and the second shaft are coupled via a motive force transmission mechanism including a transmission for increasing speed at the side of the pulley. Further, a vehicle use AC generator is provided with a rotor 401 including a pair of claw shaped magnetic poles 405A and 405B and a field winding 406 wound radially inside with respect to the pair of claw shaped magnetic poles 405A and 405B and a stator 414 in which a stator winding 415 is wound on a stator iron core 414, and is further provided with a drive force transmission shaft 419 which is provided independent from a rotary shaft 403 of the rotor 401 and transmits a drive force to the rotary shaft 403 after increasing the rpm.

## Description

### BACKGROUND OF THE INVENTION

### 1. FIELD OF THE INVENTION

The present invention relates to a vehicle use AC generation system and a vehicle use AC generator used therefor, and, in particular, relates to a vehicle use AC generation system which is suitable for an automobile use AC generation device and a vehicle use AC generator used therefor.

Further, the present invention relates to a vehicle use AC generator and a drive force transmission system used therefor, and, in particular, relates to a vehicle use AC generator which is suitable for an automobile use AC generation device and a drive force transmission system used therefor.

### CONVENTIONAL ART

As disclosed in JP-A-60-22499 (1995), in order to enhance output during low speed, a conventional vehicle use AC generator is provided with a planetary gear for increasing speed and a mechanical decoupling mechanism by a built-in electromagnetic clutch at the high speed side.

The above conventional art includes a problem of large noise during high speed rotation because of the structure in which a cooling use fan is attached to a rotor. For this reason, during high speed rotation, the speed increasing mechanism has to be decoupled by the electromagnetic clutch. Further, since the electromagnetic clutch is built-in, the size reduction of the vehicle use AC generator was difficult. Further, since only during idling the output is enhanced by increasing the speed, there was a problem that it was difficult to increase output over the entire speed range. Still further, even if the electromagnetic clutch is not mechanically decoupled, the afore said problem of noise increasing arises.

On the other hand, JP-A-2000-270518 discloses a vehicle use AC generator in which an air cooling use fan for a rotor operating as the noise source is omitted and a liquid cooling type cooling means completely covering a rotary body is used for enhancing cooling efficiency.

Further, it is generally known that in case of a dynamo electric machine if a rotor is rotated in high speed, an output enhancement can be realized. However, since in a current vehicle use AC generator a crank pulley of an engine is directly connected via a belt with a pulley of a generator. The pulley is rotated in proportion to the rpm of the engine. Usually, since the pulley outer diameter of the vehicle use AC generator is set smaller than the pulley outer diameter of the engine crank pulley, the AC generator is coupled to the engine in a speed increasing relationship. In a most typical pulley ratio, if assuming the speed of the crank pulley as 1.0, the speed of the pulley at the side of the vehicle use AC generator is increased to about 2.5 times.

This speed increasing ratio of 2.5 times is determined depending on such as an allowable outer diameter of the crank pulley, the pulley diameter of the vehicle use AC generator which is determined by a belt contact angle required for torque transmission thereof and an allowable speed of the belt. For example, when the maximum engine rpm is 7,300 and the pulley ratio is 2.5 times, the pulley rpm at the side of the vehicle use AC generator is 18,000. For example, when the pulley outer diameter is 60mm, the circumferential speed of the belt is 56.5m/s which substantially reaches the allowable speed of the belt. Therefore, in the present time, a further speed increase is difficult.

Although it is conceived that if the rotor is rotated in more high speed, output enhancement can be realized, however, for such measure the pulley ratio has to be increased. However, it is difficult to increase the currently used outer diameter of the crank pulley in view of the layout thereof in an engine room, and it is also difficult to decrease the pulley diameter at the side of the AC generator in view of the life time of the belt.

Usually, a vehicle use AC generator is provided with a rotor including a pair of claw shaped magnetic poles each having a plurality of claw portions and being disposed so as to oppose each other and a field winding wound radially inside with respect to the claw portions of the claw shaped magnetic poles and a stator in which an output use stator winding is wound on a stator iron core, and when current is flown through the field winding, the pair of claw shaped magnetic poles are respectively magnetized into N pole and P pole and a magnetic circuit is formed in which fluxes emerging from the claw shaped pole magnetized in N pole return to the claw shaped pole magnetized in P pole via the stator iron core in the stator, and when these fluxes in the magnetic circuit cross with the stator winding in the stator and through rotation of the rotor, an AC induced voltage is generated in the stator winding.

Since such vehicle use AC generator is incorporated in a vehicle main body such as in an engine trunk room of an automobile while being subjected to limitations with regard to lay-out, it is preferable to reduce the size thereof and further it is generally and the theoretically known that if the rotor is rotated in a high speed, the size of the vehicle use AC generator can be reduced. Namely, for example, when a same output is required, and if the rpm thereof can be increased twice, either of the amount of the fluxes emerging from the magnetic poles or the number of turns of the field winding can be halved, therefore, the size of the winding portion can be reduced correspondingly, and the size of concerned vehicle use AC generator can be reduced as a whole.

Further, as mentioned above, the rotating shaft of the rotor and the output shaft of the engine which causes a drive force for the rotor are coupled via a belt connecting between the generator pulley and the crank pulley provided for the respective shafts. In such instance, the outer diameter of the engine crank pulley is set larger than the outer diameter of the generator pulley and the engine rpm is transmitted to the rotor after increasing the speed by 2-3 times. However, the speed increasing ratio of 2-3 times is limited at the design stage depending on an allowable outer diameter of the crank pulley, the pulley outer diameter at the side of the rotor based on a contact angle of the belt required for torque transmission of the vehicle use AC generator and an allowable speed of the belt, therefore, a further speed increase is difficult for the structure in which the engine crank pulley and the generator pulley are simply coupled by the belt.

For example, JP-A-60-22499 (1995) discloses a vehicle use AC generator with a speed increasing mechanism which further increases the rpm transmitted to the rotor in which a planetary gear mechanism is provided in the generator pulley and the rpm of the generator pulley is transmitted to the rotary shaft of the rotor after being speed-increased. Further, in the conventional art, an electromagnetic clutch which mechanically decouples the generator pulley from the rotary shaft of the rotor, for example, at a high speed rotation, is built-in in the generator pulley.

However, the above conventional art includes the following problems.

Namely, although with the above conventional art the rotor can be rotated in a high speed by making use of the speed increasing mechanism, however, since the planetary gear mechanism is built-in within the generator pulley, the outer diameter of the generator pulley inherently increases. Further, since the generator pulley also builds-in the electromagnetic clutch, it is inappropriate to reduce the size of the vehicle use AC generator as a whole. Still further, since the planetary gear mechanism is used in addition, a problem is caused that the number of parts increases and accordingly the manufacturing cost thereof rises.

### SUMMARY OF THE INVENTION

An object of the present invention is to resolve the above problems and to provide a small sized, high speed rotation and large output vehicle use AC generation system which achieves an output enhancement in a large range from a low speed to a high speed and a vehicle use AC generator used therein.

Another object of the present invention is to provide a vehicle use AC generation system which enhances freedom with regard to securing position of a vehicle use AC generator, and a vehicle use AC generator used therefor.

Still another object of the present invention is to provide a vehicle use AC generation system in which a securing position with a short belt length can be set among allowable belt securing positions to thereby enhance reliability of a motive power transmission mechanism and a vehicle use AC generator used therefor.

A further object of the present invention is to provide a vehicle use AC generator and a drive force transmission system used therefor which can reduce the size of the main body of the vehicle use AC generator by means of rotating the rotor in a high speed.

In order to achieve the above objects, in the present invention, a vehicle use AC generation system includes a vehicle use AC generator coupled to a crank pulley shaft of an engine via a pulley, the vehicle use AC generator being provided with a rotor having magnetic poles and a field winding for magnetizing the magnetic poles, a stator which is disposed being spaced apart with a predetermined gap with respect to the rotor and has a stator winding for generating an AC voltage through magnetization of the magnetic poles, a first shaft to which the pulley is provided and a second shaft integral with the rotor, wherein the first shaft to which the pulley is provided is disposed within the side face of the vehicle use AC generator and in an equivalent position with the second shaft when seen from the crank pulley shaft or rather at the side of the crank pulley shaft from the second shaft, and the first shaft to which the pulley is provided and the second shaft are coupled via a motive force transmission mechanism including a transmission for increasing speed at the side of the pulley.

According to another feature of the present invention, a vehicle use AC generation system includes a vehicle use AC generator coupled to a crank pulley shaft of an engine via a pulley, the vehicle use AC generator being provided with a rotor having magnetic poles and a field winding for magnetizing the magnetic poles, a stator which is disposed being spaced apart with a predetermined gap with respect to the rotor and has a stator winding for generating an AC voltage through magnetization of the magnetic poles, a shaft integral with the rotor and a liquid cooling type cooling means for cooling the motive force transmission mechanism, wherein the shaft integral with the rotor and the pulley are coupled via the motive force transmission mechanism including a transmission for increasing speed at the side of the pulley.

According to still another feature of the present invention, a gear ratio of a first gear and a second gear is set at about 2 times so as to increase speed, thereby, a size reduction of the rotor is achieved.

According to a further feature of the present invention, a cooling means of liquid cooling type is employed so as to completely cover the rotor body, thereby, a cooling effect is enhanced by conducting heat in lubricant oil filled in the transmission to the cooling water.

Further, in the present invention in order to realize durability in a high speed operation a material having tensile strength of about 500 MPa is used for the rotor. Further, in order to heighten output a neodymium magnet is disposed between the claw type magnetic poles. Still further, a torque transmission means is disposed so as to permit an elongation of the pulley shaft.

The present invention is effective for reducing noises and enhancing efficiency as well as output of a vehicle use AC generator. In particular, since the vehicle use AC generator is constituted by two shafts, the position of the pulley shaft can be freely selected within the side face of the vehicle use AC generator, the belt can be disposed by shifting the position thereof, thereby, an advantage that the freedom with regard to securing position of the vehicle use AC generator can be enhanced. Further, since a securing position with a shorter belt length can be set among allowable securing positions, a reliability of the motive force transmission mechanism can be enhanced.

Further, in order to achieve the above objects, in the present invention, (1) a vehicle use AC generator is provided with a rotor including a pair of claw shaped magnetic poles and a field winding wound radially inside with respect to the pair of claw shaped magnetic poles and a stator in which an stator winding is wound on a stator iron core, and is further provided with a drive force transmission shaft which is provided independent from a rotary shaft of the rotor and transmits a drive force to the rotary shaft after increasing the rpm.

In the present invention, since the drive force transmission shaft which transmits a drive force to the rotary shaft of the rotor after speed increasing the rpm is provided independent from the rotary shaft of the rotor, while satisfying limitations with regard to design requirements, when connecting the drive power transmission shaft with an engine output shaft via a belt, such as an allowable speed of the belt and an allowable pulley outer diameter, by setting a speed increasing ratio between a crank pulley provided at the engine output shaft and the generator pulley provided at the drive power transmission shaft in about 2-3 times, the rotor can be rotated by further speed increasing the rpm of the drive force transmission shaft. Namely, as has been explained above, the rotor which is usually rotated at an rpm of about 2-3 times of the engine output shaft can further be speed-increased. As one of structures that speed-increases the rpm of such rotor, when a structure is employed in which the drive force transmission shaft is coupled with the rotary shaft of the rotor via speed increasing gear series and if the speed increasing ratio of the speed increasing gear series is, for example, set at about 2 times, the rotor can be rotated at an rpm of about 4-6 times (two times of usual rpm) of the engine rpm.

Further, as the generator pulley provided at the drive force transmission shaft an equivalent one as the generator pulley provided at the rotary shaft of the rotor in a usual vehicle use AC generator is sufficient, therefore, in contrast to the above conventional art in which the outer diameter of the generator pulley is enlarged because of building-in the planetary gear mechanism and the electromagnetic clutch, a possible size increase as a whole of the generator because of the provision of the speed increasing mechanism and a possible manufacturing cost increase because of number of parts increase can be suppressed.

Thereby, according to the present invention, for example, if a same output is required, the rotor can be rotated at further higher rpm than the rpm which is 2-3 times of the usual engine rpm, thus, for example, the size of the magnetic circuit can be reduced correspondingly, as a result, the size of the main body of the vehicle use AC generator can be reduced as a whole.

On the other hand, if the size of the vehicle use AC generator is unchanged and the rotor is rotated at further higher rpm than the rpm which is 2-3 times of the usual engine rpm, a vehicle use AC generator with a higher output can be obtained even under the same engine rpm in comparison with the usual vehicle use AC generator.

(2) in above (1), the drive force transmission shaft is preferably coupled with the rotary shaft of the rotor via the speed increasing gear series.

(3) in the above (2), the speed increasing gear series is preferably disposed at one end in the longitudinal direction of the rotary shaft of the rotor.

(4) in the above (2) or (3), the speed increase ratio of the speed increasing gear series is preferably set at about 2 times.

(5) in one of above (1) through (4), a reinforcing ring is preferably provided which connects a plurality of claw portions respectively provided for the pair of claw shaped magnetic poles in the circumferential direction of the rotor.

(6) in the above (5), the reinforcing ring is preferably provided at an end portion in the axial direction of the rotor and is formed in a semispherical shape so as to cover the air gaps between the plurality of claw portions.

Further, in order to achieve the above objects, in the present invention,

(7) a vehicle use AC generator use drive force transmission system for transmitting a drive force of an engine via a belt to a vehicle use AC generator which is provided with a rotor including a pair of claw shaped magnetic poles and a field winding wound radially inside with respect to the pair of claw shaped magnetic poles and a stator in which a stator winding is wound on a stator iron core, is provided with an idler pulley which transmits the rpm of the output shaft of the engine to the rotary shaft of the rotor after speed increasing thereof.

A pulley provided at the rotary shaft of the rotor of a vehicle use AC generator is usually directly coupled such as by a belt with a crank pulley provided at the engine output shaft, and because of the above referred to designing limitations the rpm of the rotor is limited at about 2-3 times at most of the engine rpm.

In the present invention, since the rpm of the engine output shaft is transmitted to the rotary shaft of the rotor after being speed-increased via the idler pulley, the rpm of the engine output shaft is once increased when being transmitted to the idler pulley and is further transmitted to the rotary shaft of the rotor after being speed increased. In such instance, when the speed increasing ratio of the crank pulley provided at the engine output shaft and the idler pulley is, for example, set at about 2-3 times, above mentioned design requirement limitations such as the allowable speed of the belt and the allowable outer diameters of the respective pulleys are fulfilled and likely under these design requirement limitations when the speed increasing ratio of the idler pulley and the generator pulley provided at the rotary shaft of the rotor is, for example, set at about 2 times, the rotor can be rotated at an rpm of about 4-6 times (two times of usual one) of the engine rpm.

Thereby, according to the present invention, for example, if a same output is required, the rotor can be rotated at further higher rpm than the rpm which is 2-3 times of the usual engine rpm, thus, for example, the size of the magnetic circuit can be reduced correspondingly, as a result, the size of the main body of the vehicle use AC generator can be reduced as a whole.

On the other hand, if the size of the vehicle use AC generator is unchanged and the rotor is rotated at further higher rpm than the rpm which is 2-3 times of the usual engine rpm, a vehicle use AC generator with a higher output can be obtained even under the same engine rpm in comparison with the usual vehicle use AC generator.

(8) in the above (7), the idler pulley is preferably provided with at least a first pulley connected to the engine output shaft and a second pulley having different diameter from that of the first pulley and connected to the rotary shaft of the rotor, and further, a clutch is provided which couples and decouples the first and second pulleys.

### BRIEF DESCRIPTION OF THE DRAWINGS

Fig. 1 is a vertical cross sectional view of a vehicle use AC generator representing a first embodiment of the present invention;
Figs. 2A and 2B show a structure of a water passage of the vehicle use AC generator in Fig. 1, wherein Fig. 2A is a top view of a jacket and Fig. 2B is a front view of an F bracket;
Fig. 3 is a view showing an engine constitution of a drive system in which an engine is included to the vehicle use AC generator of the first embodiment in Fig. 1 and a cooling system;
Fig. 4 is a perspective view showing an arrangement of a permanent magnet between claw shaped magnetic poles in the vehicle use AC generator of the first embodiment in Fig. 1;
Figs. 5A through 5D are views for explaining attachment of a permanent magnet used for auxiliary excitation arranged between the claw shaped magnetic poles in the vehicle use AC generator of the first embodiment in Fig. 1;
Fig. 6 is a perspective outlook view of the F bracket in the vehicle use AC generator of the first embodiment in Fig. 1;
Figs. 7A and 7B are views showing a positional relationship between a pulley, a first shaft, a second shaft and a crank pulley shaft in the drive system in which an engine is included to the vehicle use AC generator of the first embodiment in Fig. 1;
Fig. 8 is a vertical cross sectional view of a vehicle use AC generator representing a second embodiment of the present invention;
Figs. 9A and 9B are views showing a positional relationship between a pulley, a first shaft, a second shaft and a crank pulley shaft in the drive system in which an engine is included to the vehicle use AC generator of the second embodiment in Fig. 8;
Fig. 10 is a vertical cross sectional view of a vehicle use AC generator representing a third embodiment of the present invention;
Figs. 11A and 11B are views showing a positional relationship between a pulley, a first shaft, a second shaft and a crank pulley shaft in the drive system in which an engine is included to the vehicle use AC generator of the third embodiment in Fig. 10;
Fig. 12 is a vertical cross sectional view of a vehicle use AC generator representing a fourth embodiment of the present invention;
Fig. 13 is a vertical cross sectional view showing an entire structure of a vehicle use AC generator representing a fifth embodiment of the present invention;
Fig. 14 is a diagram showing a transition of mass (calculated value) of a vehicle use AC generator when the speed increasing ratio of rpm from an engine to the vehicle use AC generator is successively increased from the most common value of 2.5 times while keeping the required output constant, wherein the abscissa represents maximum rpm of the rotor when assumed that the maximum rpm of an engine output shaft is 7,200 and the ordinate represents mass (kg) of the vehicle use AC generator;
Fig. 15 is a diagram showing a comparison of generated currents of the vehicle use AC generator when the speed increasing ratio of rpm from the engine to the vehicle use AC generator is selected at the most common value of 2.5 times and a doubled value of 5.0 times, wherein the abscissa represents engine rpm, and the ordinate represents generated current (A) of the vehicle use AC generator;
Fig. 16 is a vertical cross sectional view showing a major portion of a modification of the fifth embodiment vehicle use AC generator of the present invention in which the rotor is mechanically reinforced through provision of a reinforcing ring;
Fig. 17 is a perspective view showing an entire structure of the reinforcing ring provided in the modification for mechanically reinforcing the rotor in the fifth embodiment vehicle use AC generator of the present invention;
Fig. 18 is a vertical cross sectional view showing a major portion of another modification of the fifth embodiment vehicle use AC generator of the present invention in which the rotor is mechanically reinforced through provision of a reinforcing ring;
Fig. 19 is a vertical cross sectional view showing a major portion of still another modification of the fifth embodiment vehicle use AC generator of the present invention which is applied to a water cooling type vehicle use AC generator;
Fig. 20 is a schematic diagram showing entire constitution of a drive force transmission system for a vehicle use AC generator representing a first embodiment of the present invention; and
Fig. 21 is a vertical cross sectional view showing a detailed structure of an idler pulley provided in the first embodiment drive force transmission system for a vehicle use AC generator of the present invention.

### DETAILED DESCRIPTION OF THE PREFERRED EMBODIMENTS

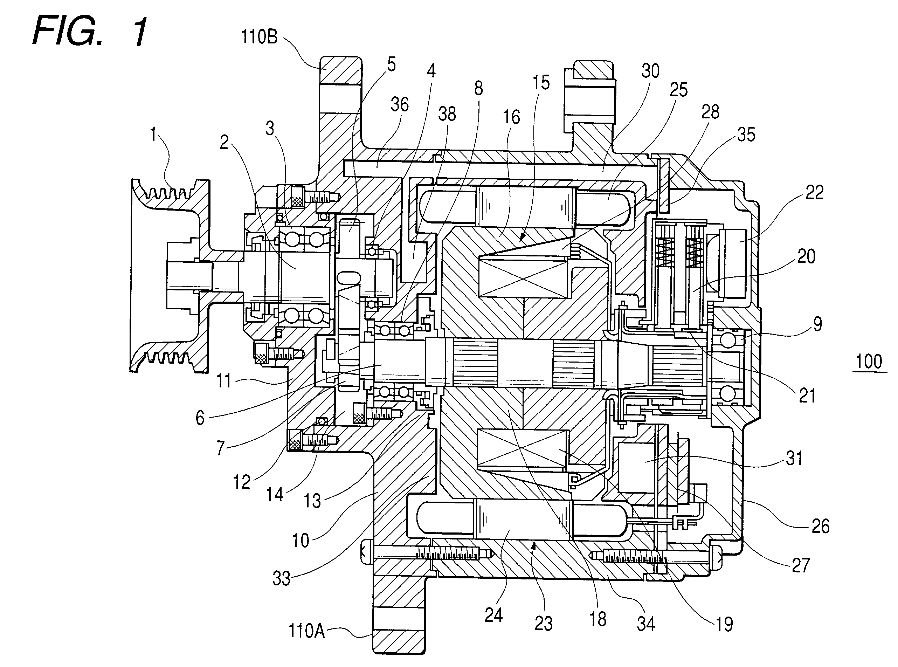

Hereinbelow, a first embodiment of the present invention will be explained with reference to Figs. 1 through 7B.

Fig. 1 shows an example of vehicle use AC generators 100 in which a drive shaft and a generator shaft are constituted by respective independent shafts and a complete liquid cooling structure is employed as the cooling means. At first the entire structure of the vehicle use AC generator will be explained. In the present embodiment, the vehicle use AC generator 100 includes a first shaft 2 and a second shaft 6, and the first shaft 2 provided with a pulley 1 and the second shaft 6 secured to a rotor 15 are coupled via a motive force transmission mechanism including a transmission for speed increasing the pulley side.

The pulley 1 which receives a motive force of an engine is secured to the first shaft 2 and is supported at two points of the bearings 3 and 4. At the center portion between the two bearings 3 and 4 a first gear 5 is disposed which is secured to the first shaft 2 so as to rotate in synchronism with the rotation of the pulley 1. The rotor 15 is provided at the second shaft 6 of the generator shaft. The rotor 15 is provided with a yoke 18 and claw shaped magnetic poles 16 at the outer circumference of the second shaft 6, and in the space between the yoke 18 and the claw shaped magnetic poles 16 a field winding 19 is disposed. Further, between the claw shaped magnetic poles 16 of the rotor 15 neodymium permanent magnets 28 for auxiliary excitation which can increase output are disposed. The field winding 19 is designed to be supplied of a DC current through a slip ring 21 provided at the rotor 15 and brushes 20 slidably connected to the slip ring 21.

With regard to polarity of the permanent magnets, the permanent magnets are magnetized so that permanent magnets having the same polarity as the magnetic poles formed by the field winding are faced each other.

The second shaft 6 is supported at two points of bearings 8 and 9, and a second gear 7 is provided at the outside from the bearing 8. These two gear portions are hermetically sealed by an F bracket 10 at the front side and a gear casing 11 and in which lubricant oil 14 is filled. Between the gear casing 11 and the F bracket 10 an O ring 12 is sealed in so as to prevent the lubricant oil from leaking to the outside. Further, the outside of the bearing 8 is sealed by a labyrinth 13.

On a stator core 24 in a stator 23 a three phase stator winding 25 is wound and around the outer circumference of the stator core 24 a jacket 34 provided with a water passage 30 is disposed. With those jacket 34 and the F bracket 10 the rotor 15 and the stator 23 constitute a completely sealed structure. Therefore, the structure hardly leaks magnetic noises and wind noises induced inside the jacket 34. Inside an R bracket 26 at the rear side a voltage regulator 22 for regulating the generation voltage and rectifier element 27 are disposed. For the rectifier element 27 such as a diode bridge and MOS-FET bridge is used. At the anti-pulley side of the jacket 34 a water passage 31 for cooling the rectifier element 27 is provided. The water passage is constituted by closing one side of the water passage 31 at the end face of a rear plate 35.

The water passage 30 in the F bracket 10 and the water passage 31 in the jacket 34 are extended to a cooling promotion portion 33 near the second shaft 6.

The rectifier element 27 is secured to the rear plate 35. The R bracket 26 is secured to the jacket 34 so as to cover the rectifier element 27 and the voltage regulator 22. For the cooling of the rotor 15 the cooling promotion portion 33 is disposed at the contacting faces between the end face in axial direction of the rotor 15, the F bracket 10 and the jacket 34 so as to facilitate a desirable heat conduction.

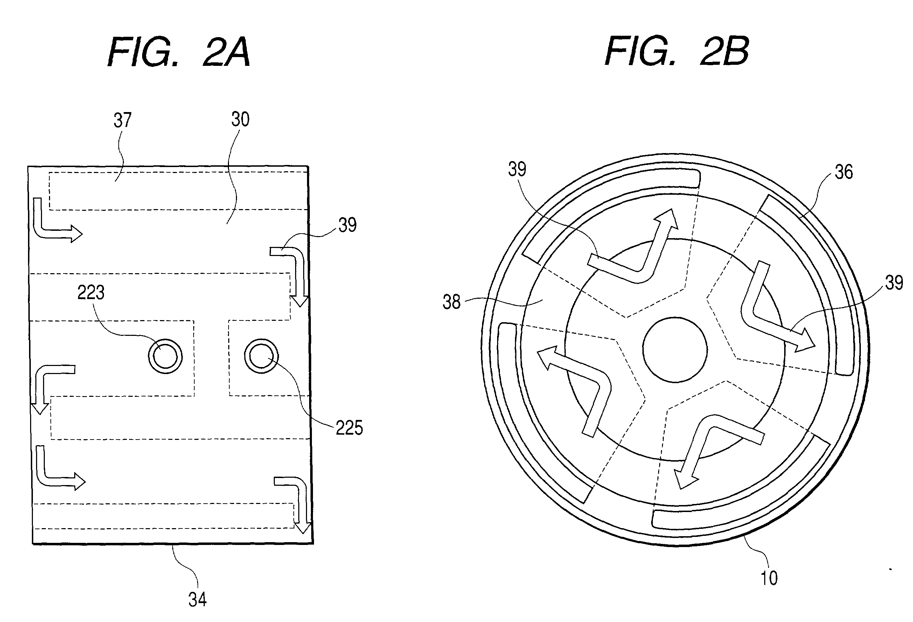

Figs. 2A and 2B show the structure of the water passages, wherein Fig. 2A shows a plane view of the jacket 34 and Fig. 2B shows a front view of the F bracket 10. In the jacket 34, inlet and outlet ports for the cooling water are constituted and the inlet side is designated as a water intake port 223 and the outlet side is designated as a water exhaust port 225. The cooling water flows in from the water intake port 223, flows through a series of passages as shown by an arrow 39 in Fig. 2A and flows out from the water exhaust port 225.

In the F bracket 10 a turning back water passage 36 is formed which permits turning back of the water flow. Further, in this instance, a water passage is formed at the inner diameter side of the F bracket 10, thereby, the cooling water flows to the inner diameter side of the F bracket 10 beyond an annular partition 38.

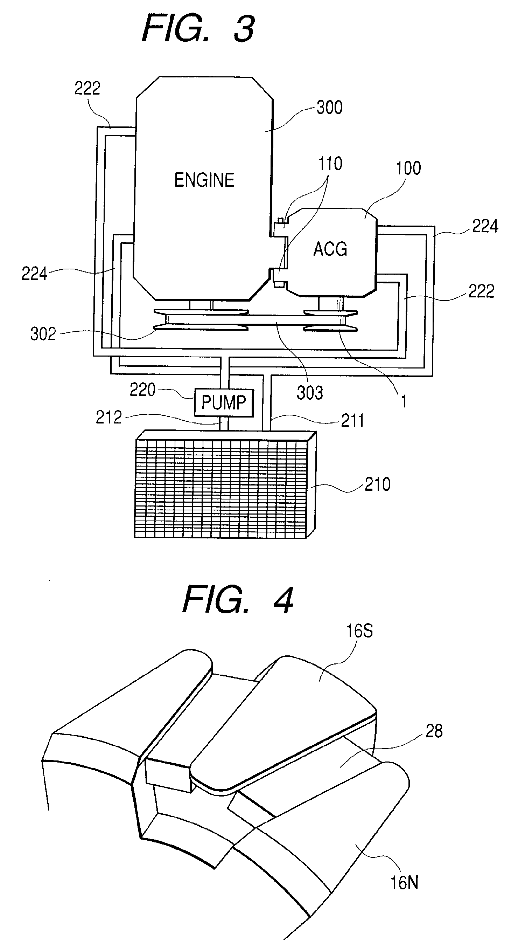

Fig. 3 shows an entire constitution of a drive system including an engine 300 and a cooling system. The vehicle use AC generator 100 is secured to the engine 300 via securing portion 110. The pulley 1 secured to the output shaft of the vehicle use AC generator 100 and a crank pulley 302 of the engine 300 are connected by a belt 303.

With respect to radiator 210 which cools the cooling water for the engine 300 parallel circulating water passages are constituted for the vehicle use AC generator 100. Namely, in parallel with the radiator 210 a cooling water circulating passage for the vehicle use AC generator 100 is provided independently so that the both show optimum cooling ability. The water circulation in these circulating passages is performed by a water pump 220 interlocked with the rotation of the engine 300. The circulating water passages include the pump 220 connected at the side of inlet 212 of the radiator 210, a water intake hose 222 and a water exhaust hose 224 connected at the side of inlet 212 of the radiator 210.

Now, returning to Fig. 1, the cooling promotion portion 33 is provided for promoting cooling of the rotor 15 and the stationary side is constituted so as to face the rotor side with a slight gap. The heat transferred to the stationary side is heat-conducted to the newly provided water passages to thereby cool the rotor 15. The water passages through which the cooling water flows are constituted by the water passage 30 for cooling the transmission, the cooling promotion portion 33, the stator winding 25 and the stator core 24 and the water passage 31 for cooling the rectifier element 27 which rectifies the generated voltage, and the respective water passages are connected in series and the water passage 31 is arranged upstream with respect to the water passage 30.

Now, the operation of the present embodiment will be explained. At first, when the pulley 1 coupled to the engine 300 is rotated, the first gear 5 attached to the pulley 1 rotates. Interlocking with the first gear 5 the second gear 7 rotates in the opposite direction. Since the second gear 7 is secured to the second shaft 6, the claw shaped magnetic poles 16 attached to the second shaft 6 rotate, thereby, a three phase AC voltage is generated at the stationary winding 25. Through full wave rectification by the rectifier element bridge 27 the three phase voltage is converted into a DC voltage. At this instance, since the gear ratio of the first gear 5 and the second gear 7 is set at about 2.0 times, if such is mounted on the currently used vehicle the rotor 15 rotates at an rpm of two times larger than the conventional one. In this instance, with respect to tooth number of the gears, if the ratio thereof is selected not to assume an integer number, it can be designed that the same teeth are not always engaged each other to thereby reduce noises.

As a result, in order to obtain a same output as the conventional one under the same pulley rpm the fluxes induced by the field winding can be halved.

Thereby, a size reduction of the vehicle use AC generator can be realized. In the above explanation, the speed increasing by means of the gear was explained, however, a speed increasing measure between two shafts is not limited to that uses the gear, but a coupling by such as belt and metal chains likely shows the same effects.

The water passage 30 is arranged around the outer circumference of the stator core 24 and is used as a heat transferring means which suppresses heat generation due to iron loss induced during power generation and due to copper loss induced in the stator winding 25. The water passage 30 is connected in series with the water passage 31 for the rectifier element 27. The heat generated due to the copper loss of the field winding 19 in the rotor 15 is heat-exchanged by the cooling promotion portion 33 provided at the end face in the axial direction of the rotor 15 as has been explained above and the heat is transferred to the water passage 30 via the F bracket 10 at the stationary side.

It is generally known that in case of a dynamo electric machine if a rotor is rotated in high speed, an output enhancement can be realized. However, for the realization thereof the pulley ratio has to be increased. However, it is difficult to increase the currently used outer diameter of the crank pulley in view of the layout thereof in an engine room, and it is also difficult to decrease the pulley diameter at the side of the AC generator in view of the life time of the belt.

In the present invention, while keeping the circumferential speed of the pulley 1 unchanged, a speed increasing mechanism is introduced in which two shaft gears are used inside the generator main body and which shows the following features.

The advantages of the two shafts are, firstly number of parts can be reduced, secondly through the use of the helical gears noises are reduced, thirdly when a tensile force by the belt is applied to the pulley shaft a deflection of the shaft with respect to the tensile force can be limited small through shortening a bearing span of the shaft and fourthly since the pulley shaft can be elongated, attachment freedom to the engine can be increased.

Further, since the attachment position of the first shaft 2 can be freely selected within the side face (at the face of the F bracket 10) of the vehicle use AC generator, attachment freedom with respect to the engine can be increased which will be explained later.

When an output is intended to be increased during low speed for an air cooling machine, an insufficient cooling of the stator winding may happen. Therefore, the output characteristic is set at about one currently used and the output enhancement by the high speeding can be utilized to reduce the size of the magnetic circuit. Since the vehicle use AC generator having the building in water cooling type speed increasing mechanism according to the present invention shows an excellent cooling performance even during a low speed operation, an output increase thereof can be realized. Further, while keeping the physical size thereof unchanged and if the number of turns in the stator winding is reduced and heavy wire lines can be used, it is possible to reduce greatly the copper loss of the stator winding while keeping the output characteristic unchanged, thereby, an advantage of enhancing efficiency can be realized.

The claw shaped magnetic poles 16 and the yoke 18 are constituted in two pieces structure by making use of a material having a large tensile strength, and a material equivalent to a welding structure use weather resistant hot rolled steel SMA 570 of JIS is used therefor. Thus, the tensile strength of the used material is 570-720 N/mm².

Fig. 4 shows a diagram in which a permanent magnet 28 is disposed between claw shaped magnetic poles 16N and 16S. In order to secure the permanent magnet 28, the side faces in circumferential direction of the claw shaped magnetic poles 16N and 16S are shaved by about 1mm while leaving the outer most portion in the radial direction, thereby, when a centrifugal force acts on the permanent magnet 28, the leaving portions stop the permanent magnets 28.

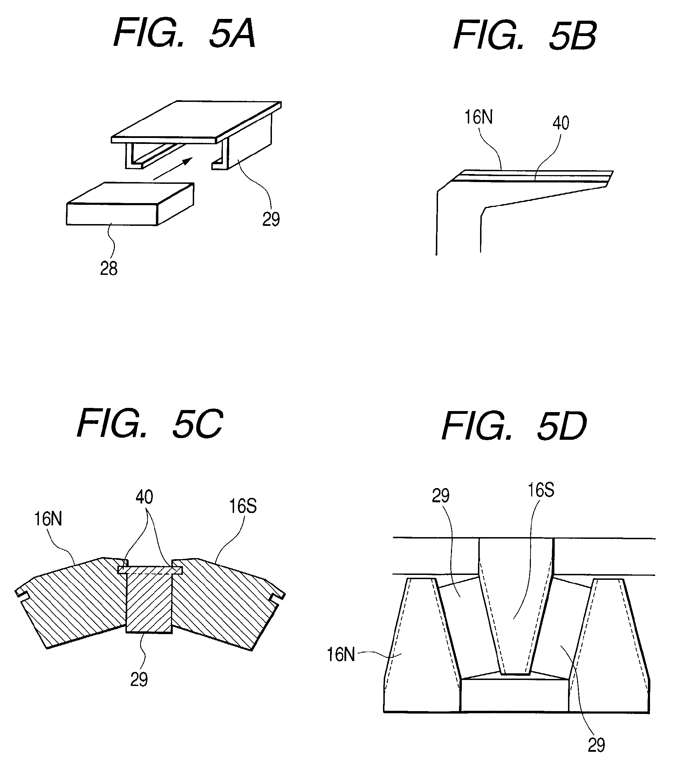

Now, an attachment of permanent magnet 28 used for auxiliary excitation and disposed between the claw shaped magnetic poles will be explained with reference to Figs. 5A through 5D. Fig. 5A shows the permanent magnet 28 used for auxiliary excitation and a permanent magnet holder 29 for wrapping the permanent magnet 28. The arrow in the drawing shows the inserting direction of the permanent magnet 28 into the permanent magnet holder 29. Fig. 5B shows a slit 40 provided at the side face of the claw shaped magnetic pole 16N at the N pole side for permitting insertion of the permanent magnet holder 29 as has been explained above. Fig. 5C shows a part of cross sectional view of the claw shaped magnetic poles 16N and 16S at its magnetic center. Between the claw shaped magnetic poles 16N and 16S the permanent magnet 28 and the permanent magnet holder 29 are disposed. Fig. 5D shows a view seen from the top of the rotor after completing the assembly of the both, and from the top the upper portion of the permanent magnet holder 29 can be seen between the claw shaped magnetic poles.

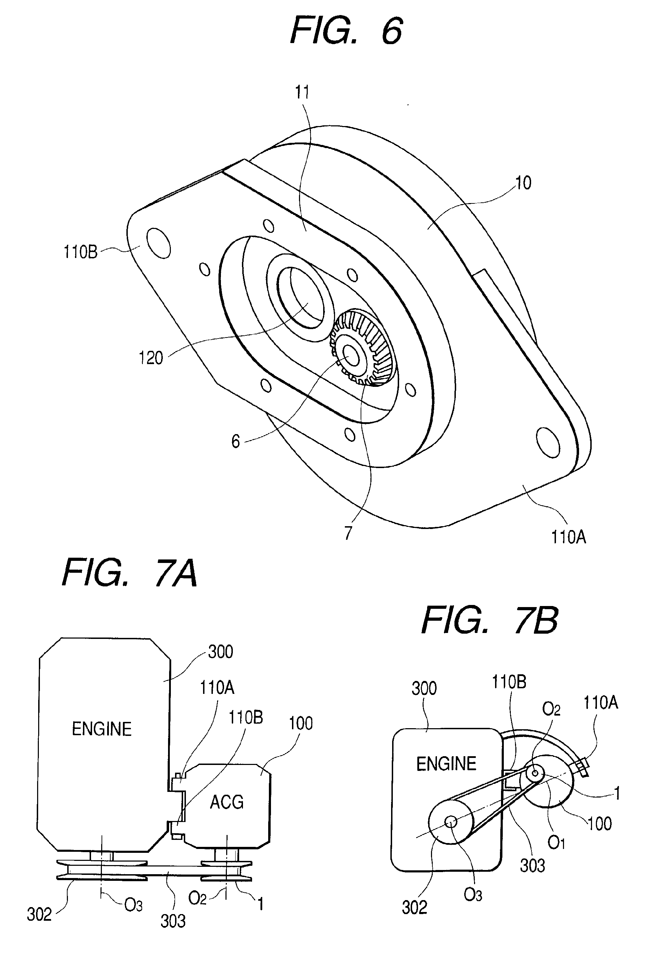

Fig. 6 shows a perspective outlook of the F bracket 10. The F bracket 10 is provided with the gear casing 11 and the vehicle use AC generator fixing portions 110A and 110B. The first shaft 2 and the second shaft 6 are connected via the first gear 5 and the second gear 7 disposed in a gear container 120 so as to speed-increase. As shown in the drawing through integrating the gear casing 11 and the F bracket 10 the strength thereof can be enhanced. Further, the vehicle use AC generator fixing portions 110A and 110B are provided at the opposite sides of the gear casing 11, in other words, through elongating a part of the gear casing 11 in the opposite side from the fixing portion 110A and providing the fixing portion 110B of the vehicle use AC generator a strong structure can be formed. Further, the first and second gears can be realized through speed change ratio of 1:1 gear. Further, in order to reduce noises helical gears are used for the gears.

As has been explained above and as has been shown in Figs. 7A and 7B, in the present embodiment, the vehicle use AC generator 100 is arranged in such a manner that the first shaft 2 provided with the pulley 1 is disposed at the equivalent position or further toward the side of the crank pulley shaft 302 when seen from the side face thereof. Namely, as shown in Fig. 7B, the rotation center O2 of the first shaft 2 is positioned further toward the side of the rotation center O3 of the crank pulley shaft 302 than the rotation center O1 of the second shaft 6. Practically, it is preferable to locate the rotation center O2 of the first shaft 2 within the side face (the face of the F bracket 10) of the vehicle use AC generator 100 and at an equivalent position as the rotation center O1 of the second shaft 6 or further toward the crank pulley shaft 302 when seen from the rotation center O3 of the crank pulley shaft 302. Thereby, the length of the belt 303 can be shortened and the reliability of the belt 303 as the motive force transmission mechanism can be enhanced.

Further, as has been explained above, the attachment position of the first shaft 2 can be freely selected at the side face (within the face of the F bracket 10) of the vehicle use AC generator 100, the attachment freedom with respect to the engine can be increased.

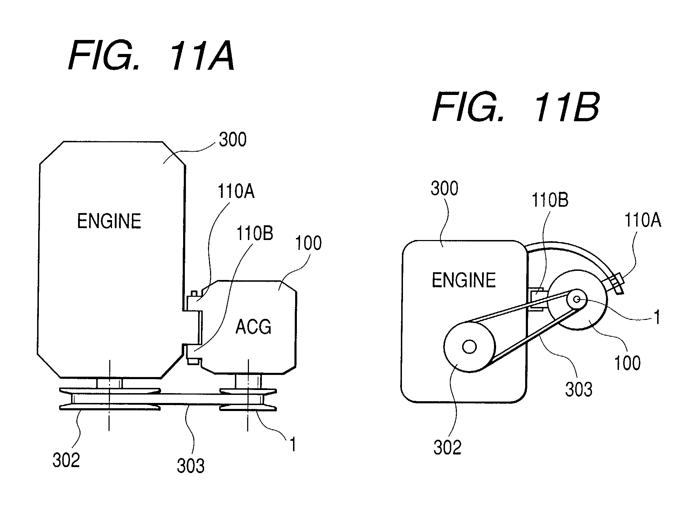

When securing a vehicle use AC generator to an engine by making use of a usual securing method with a single shaft and if the securing portion of the vehicle use AC generator is determined, the extending route of the belt is from the pulley shaft center of the vehicle use AC generator to the crank pulley shaft (see Fig. 11). Thus, the position and route of the belt are fixed by a certain degree by the attachment position of the vehicle use AC generator. Therefore, if there are auxiliary machines such as a compressor for an air conditioner and a pump for a power steering wheel on the position and route of the belt, either the securing position of the vehicle use AC generator or the position of the auxiliary machines has to be changed.

Contrary to the above, in the case of the vehicle use AC generator of the present invention which is constituted by the two shafts (first and second shafts 2 and 6), the position of the pulley shaft can be freely selected within the vehicle use AC generator, therefore, the belt can be disposed while shifting the position thereof. Namely, as shown in Figs. 7A and 7B, in the case of the vehicle use AC generator 100 constituted by the two shafts, since the position of the pulley shaft 1 can be freely selected within the lateral cross sectional range of the vehicle use AC generator 100, the belt 303 can be disposed while shifting the position thereof from obstacles on the position and route of the belt such as auxiliary machines.

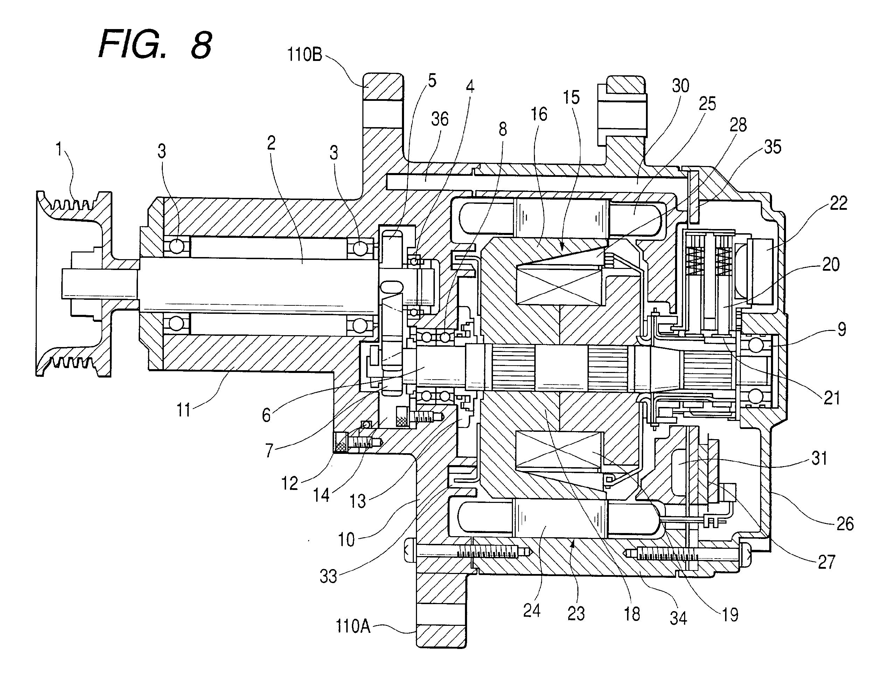

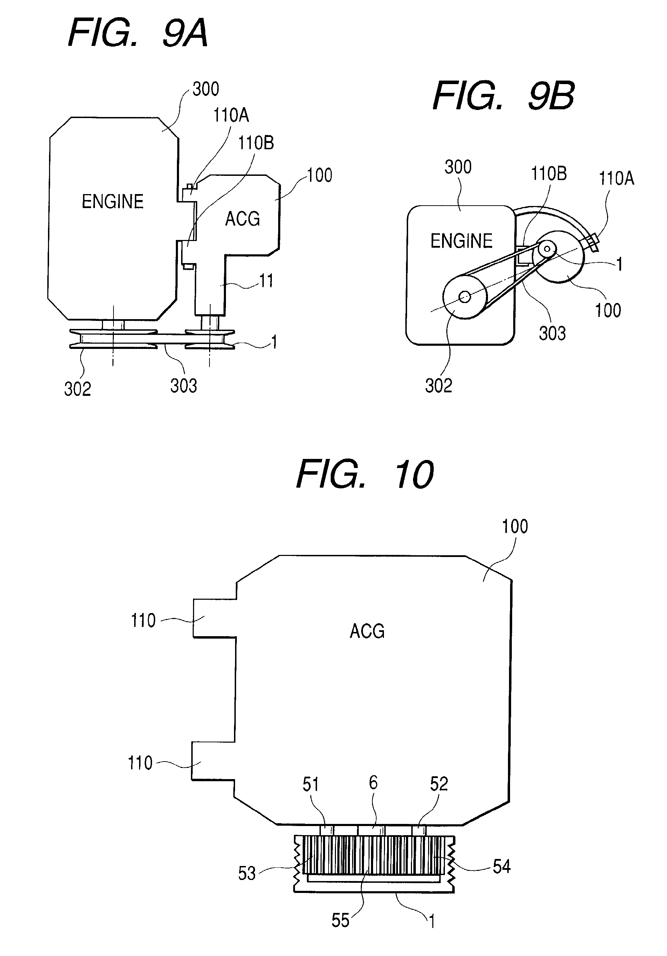

Figs. 8, 9A and 9B show another embodiment using another securing method in which, in order to further enhance freedom with regard to securing position of the vehicle use AC generator, in addition to separating the pulley shaft (the first shaft 2) and the rotor shaft (the second shaft 6), the pulley shaft (the first shaft 2) is constituted in a long structure.

Fig. 8 is a view for explaining a vertical cross sectional structure of a vehicle use AC generator of the second embodiment. A difference from Fig. 1 embodiment is that the first shaft 2 is elongated. Further, although in the drawing the first shaft 2 is supported at three points by bearings 2, 3 and 4, the intermediate bearing 3 can be omitted. The cooling promotion portion 33 is constituted by a U shaped member which faces through planes with a slight gap to a cylindrical fin provided at the rotor 15.

Further, as shown in Figs. 9A and 9B, the vehicle use AC generator is disposed when seen from the side face thereof in such a manner that the first shaft 2 provided with the pulley 1 is disposed at an equivalent position with the second shaft 6 or further toward the side of the crank pulley 302. Thereby, the length of the belt can be shortened and reliability of the belt as a motive force transmission mechanism can be enhanced. Further, as will be seen from Fig. 8, in addition to separating the pulley shaft (the first shaft 2) 302 and the rotor shaft (the second shaft 6) the pulley shaft (the first shaft 2) is constituted in a long structure, freedom with regard to securing position of the vehicle use AC generator is further enhanced.

Further, in the two shaft structure of the present invention through use of such as a spur gear and a helical gear the same effect and advantage can be obtained.

Fig. 10 shows a third embodiment of the present invention in which, in order to speed-increase only with a single shaft, a planetary gear coupled with the rotor shaft (the second shaft 2) is disposed within the pulley, wherein around the outer circumference of a usual sun gear 55 three planetary gears 54 are disposed and the outside the three planetary gears 54 a pulley gear 53 is disposed, and the pulley gear 53 is disposed at the side of the inner circumference of the pulley 1, and further shafts 51 and 52 of the planetary gears are secured on the bracket 10 of the vehicle use AC generator 100.

In the present embodiment, for example, when doubling the speed increase and when assuming the tooth number of the pulley gear 53 is set at 59, tooth numbers of the planetary gears 54 and the sun gear 55 are respectively set at 17 and 25.

Figs. 11A and 11B show a positional relationship of the pulley, the first shaft 2, the second shaft 6 and the crank pulley in the drive system adding the engine to the vehicle use AC generator of Fig. 10 embodiment. In the present embodiment, the vehicle use AC generator 100 is disposed when seen from the side face thereof in such a manner that the first shaft 2 provided with the pulley 1 is disposed at the same position as the second shaft 6.

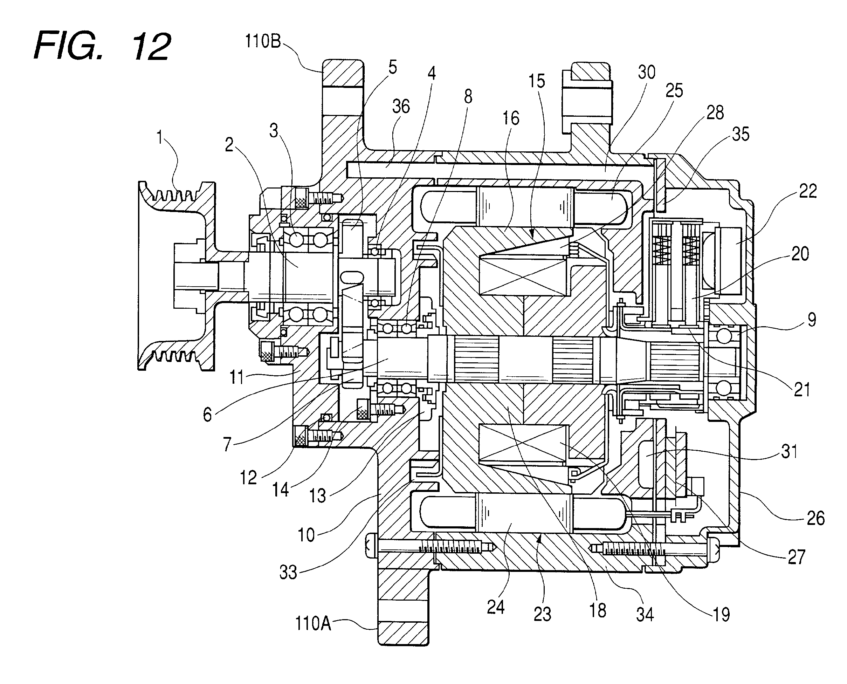

Now, a fourth embodiment of the present invention will be explained with reference to Fig. 12. A difference of the present embodiment from Fig. 1 embodiment is that the water passage 30 in the F bracket 10 and the water passage 31 in the jacket 34 are not extended to the cooling promotion portion 33, and the other constitutions thereof are unchanged, the detailed explanation thereof omitted.

As has been explained hitherto, in the present invention, since the transmission for rotating the rotor in a high speed is built in, the output of the vehicle use AC generator can be enhanced. Further, in order to realize the speed-up of the rotor, material having tensile strength of about 500 MPa is used for the rotor, a liquid cooling structure which generates no fan noise is used, thereby, the output enhancement of the vehicle use AC generator can be realized. Still further, by means of the two shaft structure of the pulley shaft and the rotor shaft, the layout freedom of the pulley shaft within the side face of the vehicle use AC generator is enhanced. Still further, since the elongation of the pulley shaft can be permitted, the freedom of the securing position of the vehicle use AC generator with respect to the engine is enhanced. Still further, since the pulley shaft and the rotary shaft of the rotor rotate in opposite direction each other, an advantage of reducing vibration can also obtained.

The present invention is effective for reducing noises and enhancing efficiency as well as output of a vehicle use AC generator. In particular, since the vehicle use AC generator is constituted by two shafts, the position of the pulley shaft can be freely selected within the side face of the vehicle use AC generator, the belt can be disposed by shifting the position thereof, thereby, an advantage that the freedom with regard to securing position of the vehicle use AC generator can be enhanced. Further, since a securing position with a shorter belt length can be set among allowable securing positions, a reliability of the motive force transmission mechanism can be enhanced.

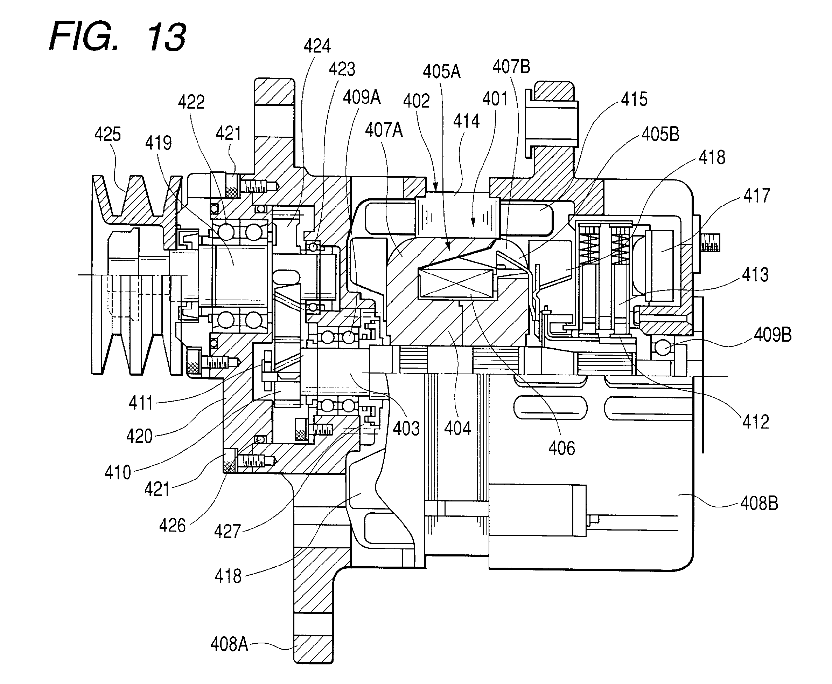

Fig. 13 is a cross sectional view showing an entire structure of a vehicle use AC generator representing fifth embodiment of the present invention.

In Fig. 13, the vehicle use AC generator of the present invention is provided with a rotor 401 and a stator 402 as the major constitution elements. The rotor 401 is constituted by a rotor shaft 403, a yoke 404 through the rotation center of which the rotor shaft 403 is inserted, a pair of claw shaped magnetic poles 405A and 405B each constituted by a magnetic body which are disposed in opposing manner via the yoke 404 with a predetermined interval in the axial direction (in Fig. 13 in right and left direction) of the rotor 401 and a field winding 406 wound around the yoke 404.

Further, each of the claw shaped magnetic poles 405A and 405B is provided with a plurality of claw portions 407A and 407B as shown in Fig. 13, these claw portions 407A and 407B are disposed so as to overlap each other in the axial direction (in Fig. 13 in right and left direction) of the rotor 401 when seen from the circumferential direction of the rotor 401 and the field winding 406 wound around the yoke 404 is positioned inside of these claw portions 407A and 407B in radial direction of the rotor 401 being spaced apart with a predetermined gap.

The rotary shaft 403 of the rotor 401 is rotatably supported by a bearing 409A near at one of the end portions thereof (in Fig. 13 side) and by a bearing 409B near at the other end thereof (in Fig. 13 right side) with respect to the generator including end brackets 408A and 408B. Further, at the one end portion (in Fig. 13 left side) of the rotor 403 a gear 410 is fastened by a bolt 411 and near at the other end portion (in Fig. 13 right side) a slip ring 412 is provided.

Further, inside the end bracket 408B, brushes 413 are provided so as to slidably contact with the slip ring 412, and through these brushes 413 and the slip ring 412 an electric power is supplied to the field winding 406 in the rotating rotor 1. Through the current supply to the field winding 406 the claw shaped magnetic pole 405A of the rotor 401 is magnetized into S pole and the claw shaped magnetic pole 405B into N pole.

The stator 402 is constituted by a stator iron core 414 disposed outside in radial direction (in Fig. 13, up and down sides) of the rotor 401 being spaced apart with a slight air gap from the claw portions 407A and 407B and sandwiched between the end brackets 408A and 408B, and an output use stator winding 415 wound in three phase manner on the stator iron core 414, and the rotor 401 rotates relatively with respect to the stator 402. Namely, in the stator 402, a magnetic circuit is formed in which the magnetic fluxes emerges from the claw shaped magnetic pole 405B magnetized in N pole and returns to the claw shaped magnetic pole 405A magnetized in S pole via the stationary iron core 414, and through crossing of the magnetic fluxes in the magnetic circuit with the stationary winding 415 and the rotation of the rotor 401 an AC voltage is induced in the stator winding 415.

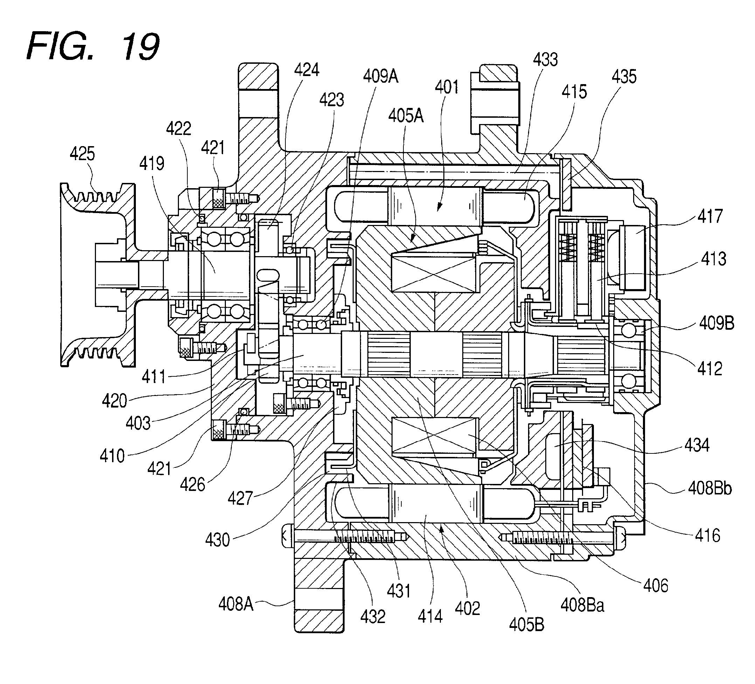

Further, inside the end bracket 408B a rectifier circuit 416 and a voltage regulator 417 (see Fig. 19 which will be explained later) are provided. Although not illustrated to avoid complexity, the rectifier circuit 416 includes a battery terminal to be connected to a plus electrode of a battery and an earth terminal to be connected to a minus electrode of the battery, and the AC voltage induced in the stator winding 415 is rectified and converted into a DC voltage. Further, the voltage regulator 417 controls current to be supplied to the field winding 406 depending on a load current and rpm of the rotor 401 so that the DC voltage rectified by the rectifier circuit 416 is kept at a constant voltage, for example, at about 14.5V for charging the battery not shown.

Further, at the both sides in the axial direction (in Fig. 13 in right and left direction) of the rotor 401 cooling fans 418 are respectively provided for cooling the stator 402 and the rectifier circuit (see Fig. 19 which will be explained later) 416, and the amount of wind generated by the fans is designed to be obtained in proportion to the rpm of the rotor 401.

A major feature of the present embodiment in the present invention is that the two shaft structure is employed in that a drive force transmission shaft 419, which transmits the rpm to the rotor shaft 403 of the rotor 401 after speed increasing thereof, is provided independent from the rotor shaft 403 of the rotor 401.

Namely, as shown in Fig. 13, at the left side of the end bracket 408A a gear casing 420 is secured by a bolt 421, and inside the gear casing 420 the drive force transmission shaft 419 is provided of which both ends are respectively supported by bearings 422 and 423 in such a manner to permit rotation thereof. On the drive force transmission shaft 419 between the bearings 422 and 423 a gear 424 is secured such as by a key and is designed to engage with the gear 410 provided on the rotor shaft 403 of the rotor 401. In this instance, the gear ratio (speed increasing ratio) of the gears 424 and 410 is set, for example, at about 2 so that the rotation of the drive force transmission shaft 419 is transmitted to the rotor shaft 403 of the rotor 401 after being speed increased.

Further, at one of the end portions (in Fig. 13 at left side) of the drive force transmission shaft 419 a generator pulley 425 is provided, and although not illustrated so as to avoid complexity, the generator pulley 425 is coupled via a belt, for example, with a crank pulley provided at the engine output shaft so that the rotation of the engine output shaft is transmitted to the drive force transmission shaft 419 via the belt.

The pulley ratio of the engine crank pulley not shown and the generator pulley 425 is set in the range of above design requirement limitation in such a manner that the rpm of the engine output shaft is transmitted to the drive force transmission shaft 419 after being speed increased by, for example, about 2-3 times.

The gears 410 and 424 are accommodated in the space between the gear casing 420 and the bracket 408A and in the space lubricant oil is filled so as to prevent seizing of the bearings 410 and 424. Further, in order to prevent leakage of the lubricant oil an O ring 426 is provided between the end bracket 408A and the gear casing 420 to seal the same, still further, a portion which isolates the space in the end bracket 408A from the space accommodating the rotor 401, namely the right side portion of the bearing 409A is sealed by a labyrinth 427.

Further, it is preferable to use such as a helical gear for the gears 410 and 424 so as to reduce noises due to engagement thereof. Further, although the air gap between a rotor and a stator is usually about 0.4mm, it is preferable in the present embodiment to expand the air gap length between the rotor 401 and the stator 402, for example, to about 0.6mm so as to rotate the rotor at high speed as well as to achieve magnetic noise reduction.

The gears 410 and 424 constitute a speed increasing gear series as referred to in the appended claims.

An operation of the thus constituted vehicle use AC generator of the present embodiment will be explained.

At first, an electric power is supplied via the brushes 413 and the slip ring 412 to the field winding 406 on the rotor 401 which receives motive force from the engine not shown and rotates, and the claw shaped magnetic pole 405A of the rotor 401 is magnetized into S pole and the claw shaped magnetic pole 405B into N pole. Namely, in the stator 402, a magnetic circuit is formed in which the magnetic fluxes emerges from the claw shaped magnetic pole 405B magnetized in N pole and returns to the claw shaped magnetic pole 405A magnetized in S pole via the stationary iron core 414. In this instance, the magnetic fluxes in the magnetic circuit formed by the field winding 406 are increased through addition of the magnetic fluxes induced by the permanent magnets 407 used for auxiliary excitation, and through crossing of the magnetic fluxes in the magnetic circuit with the stationary winding 415 and the rotation of the rotor 401 an AC voltage is induced in the stator winding 415.

Finally, the induced voltage is rectified by the rectifier circuit 416 and is converted into a DC voltage to charge the battery not shown. Further at this moment, the voltage regulator 417 controls current to be supplied to the field winding 406 depending on a load current and rpm of the rotor 401 so that the DC voltage rectified by the rectifier circuit 416 is kept at a constant voltage, for example, at about 14.5V for charging the battery not shown.

Since such vehicle use AC generator is incorporated in a vehicle main body such as in an engine trunk room of an automobile while being subjected to limitations with regard to lay-out, it is preferable to reduce the size thereof and further it is generally and theoretically known that if the rotor is rotated in a high speed, the size of the vehicle use AC generator can be reduced. Namely, for example, when a same output is required, and if the rpm thereof can be increased twice, either of the amount of the fluxes emerging from the magnetic poles or the number of turns of the field winding can be halved, therefore, the size of the winding portion can be reduced correspondingly, and the size of concerned vehicle use AC generator can be reduced as a whole.

Further, the rotor 401 uses the engine not shown as a drive power source, and the rotating shaft of the rotor and the output shaft of the engine are coupled via a belt connecting between the generator pulley and the crank pulley provided for the respective shafts. In such instance, the outer diameter of the engine crank pulley is set larger than the outer diameter of the generator pulley and the engine rpm is transmitted to the rotor after increasing the speed by 2-3 times. However, the speed increasing ratio of 2-3 times is limited at the design requirement limitation depending on an allowable outer diameter of the crank pulley, the pulley outer diameter at the side of the rotor based on a contact angle of the belt required for torque transmission of the vehicle use AC generator and an allowable speed of the belt. For example, when setting the speed increasing ratio at the most common value of 2.5 times under the maximum rpm of the engine output shaft of 7,200 rpm, the rpm of the generator pulley at the side of the vehicle use AC generator assumes 18,000 rpm. When assuming that the outer diameter of the generator pulley as φ60mm which is most common value, the circumferential speed of the belt gives 56.5 m/s which reaches substantially to the critical speed of 60 m/s. Further, in order to increase the speed increasing ratio it is conceived to enlarge the outer diameter of the engine crank pulley, however, such is difficult in view of the layout in the engine trunk room and further it is also difficult to reduce the outer diameter of the generator pulley in view of the life time of the belt. Therefore, a further speed increase is difficult for the structure in which the engine crank pulley and the generator pulley are simply coupled by the belt.

In the present embodiment, since the drive force transmission shaft 419 which transmits a drive force to the rotary shaft 403 of the rotor 401 after speed increasing the rpm is provided independent from the rotary shaft 403 of the rotor 401, and the drive force transmission shaft 419 and the rotary shaft 403 of the rotor 401 are coupled via the gears 424 and 410, while satisfying limitations with regard to design requirements, when connecting the drive power transmission shaft 419 with an engine output shaft via a belt (not shown), such as an allowable speed of the belt and an allowable pulley outer diameter, by setting a speed increasing ratio between a crank pulley (not shown) provided at the engine output shaft and the generator pulley 425 provided at the drive power transmission shaft 419 in about 2-3 times, the rotor 401 can be rotated by further speed increasing the rpm of the drive force transmission shaft 419. Namely, as has been explained above, the rotor which is usually rotated at an rpm of about 2-3 times of the engine output shaft can be rotated at an rpm of about 4-6 times (two times of usual rpm) of the engine rpm, if the gear ratio of the gears 424 and 410 is set at about 2 times.

Hereinbelow, an effect and advantage obtained by the above embodiment will be successively explained.

### (1) Size reduction of the vehicle use AC generator

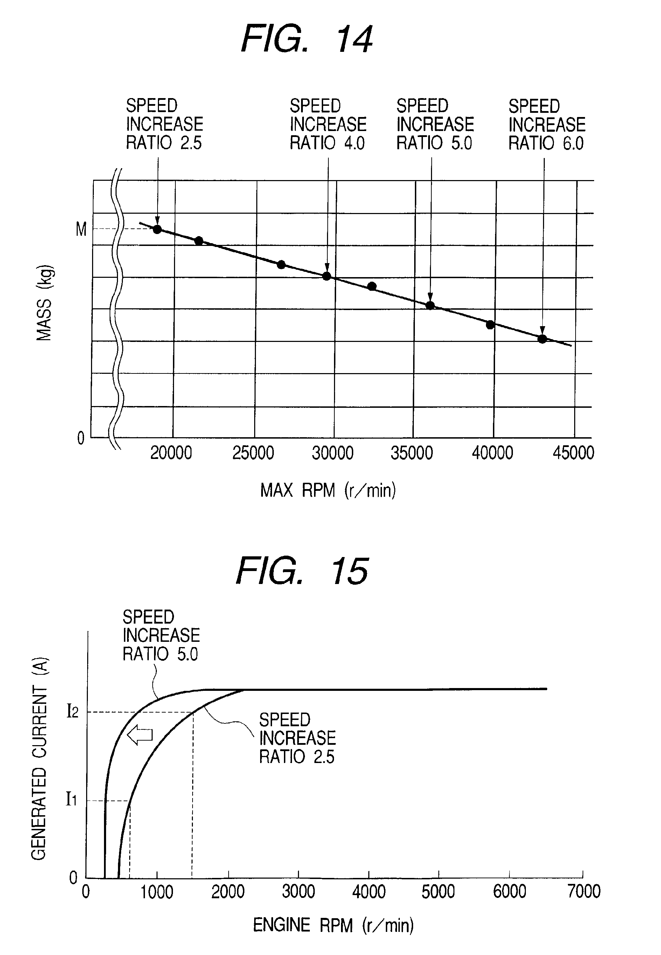

Fig. 14 is a diagram showing a transition of mass (calculated value) of a vehicle use AC generator when the speed increasing ratio of rpm from an engine to the vehicle use AC generator is successively increased from the most common value of 2.5 times while keeping the required output constant, wherein the abscissa represents maximum rpm of the rotor when assumed that the maximum rpm of an engine output shaft is 7,200 and the ordinate represents mass (kg) of the vehicle use AC generator.

As shown in Fig. 14, when keeping the required output constant, and if the speed increasing ratio is increased, the mass of the vehicle use AC generator decreases linearly, which is because the maximum rpm of the rotor increases linearly as the speed increasing ratio increases and because of the required output being kept constant, the size of the magnetic circuit in the vehicle use AC generator decreases in proportion with the increase of the maximum rpm of the rotor. Further, with reference to Fig. 14, it is assumed that the mass of the vehicle use AC generator at the time of a common speed increasing ratio of 2.5 times as M (kg), and if the speed increasing ratio is doubled to 5 times, it is calculated that the light weighting of the mass of the vehicle use AC generator as a whole upto a little under about 40% can be realized.

In the present embodiment, if the speed increasing ratio between the engine crank pulley and the generator pulley 425 and gear ratio of the gears 410 and 424 are set so that the rotor 401 rotates, for example, at an rpm of about 4-6 times larger than the rpm of the engine output shaft, it is calculated that light weighting of the vehicle use AC generator of a little under 30% - a little over 50% can be realized. Further, in view of the size reduction as well as the mechanism strength of the vehicle use AC generator it is appropriate to select a speed increasing ratio of about 4-6 times.

Further, in the present embodiment, the same or equivalent generator pulley provided at the rotary shaft of a rotor in a usual vehicle use AC generator can be used for the generator pulley 425 provided at the drive power transmission shaft 419, therefore, even with the provision of the speed increasing mechanism, a size increase of the generator as a whole can be suppressed in comparison with the conventional art in which the outer diameter of the generator pulley is enlarged because of the building in of the planetary gear mechanism and the electromagnetic clutch.

According to the present embodiment, as has been explained hitherto, for example, under the same output requirement, the rotor 401 can be rotated at a further higher rpm than about 2-3 times of usual engine rpm, in that, for example, at about 4-6 times of the engine rpm, thereby, for example, the size of the magnetic circuit in the vehicle use AC generator can be reduced correspondingly, and the size for the vehicle use AC generator as a whole can be reduced.

### (2) Output increasing

In the present embodiment, since the rpm of the rotor 401 can be greatly enhanced, accordingly the output thereof can also be enhanced, therefore, if the size of the vehicle use AC generator is unchanged and if the rotor 401 is rotated at a further higher rpm than about 2-3 times of usual engine rpm, in that, for example, at about 4-6 times of the engine rpm, the output of the vehicle use AC generator can be enhanced even under the same engine rpm in comparison with the usual vehicle use AC generator.

Fig. 15 is a diagram showing a comparison of generated currents of the vehicle use AC generator when the speed increasing ratio of rpm from the engine to the vehicle use AC generator is selected at the most common value of 2.5 times and a doubled value of 5.0 times, wherein the abscissa represents engine rpm, and the ordinate represents generated current (A) of the vehicle use AC generator.

As shown in Fig. 15, when rotating a rotor with a usual structure at an rpm of about 2.5 times of the engine output shaft, and when the engine rpm is at an idling rpm of 700 rpm, the output current assumes I₁(A). Contrary thereto, when rotating the rotor 401 of the present embodiment at an rpm of about 5 times of the engine output shaft, the output current at the time when the engine rpm is at the idling rpm greatly exceeds I₁(A). Further, when rotating the engine at 1,500 rpm of which value is one at a common cruising and when rotating the rotor at an rpm of about 2.5 times of the engine output shaft, the output current assumes I₂(A), however, such output current can be obtained near at the idling rpm in the present embodiment (for example, when the rotor 401 is rotated at an rpm of about 5 times of the engine output shaft).

Generally, a maximum rpm of an engine is 7,000 rpm and an idling rpm thereof is 700 rpm. It is an important problem for a generator how to obtain the required current generation at such idling rpm, in this instance, with the present embodiment a sufficient current can be obtained.

Further, if the rotor of a vehicle use AC generator is rotated at about 2,000 rpm, a sufficient power can be generally generated. According to the present embodiment, it is sufficient if the engine is rotated at about 330-500 rpm which is effective for reducing the idling rpm of an automobile in view of a environmental protection for suppressing such as air pollution and global warming phenomenon.

### (3) Reduction of number of parts

Further, in the present embodiment, the same or equivalent generator pulley provided at the rotary shaft of a rotor in a usual vehicle use AC generator can be used for the generator pulley 425 provided at the drive power transmission shaft 419, therefore, even with the provision of the speed increasing mechanism, number of parts increase of the generator as a whole can be suppressed in comparison with the conventional art in which the outer diameter of the generator pulley is enlarged because of the building in of the planetary gear mechanism and the electromagnetic clutch.

### (4) Rigidity enhancement

Generally, between the generator pulley and the crank pulley of the engine a belt is connected and a tension by the belt is acted on the shaft provided with the generator pulley to cause a deflection. In the present embodiment, however, the generator pulley 425 is not provided to the rotary shaft 403 of the rotor 401, but provided to the drive power transmission shaft 419 having a shorter length in comparison with that of the rotary shaft 403, the deflection of the drive power transmission shaft 419 which is subjected to the tension force by the belt can be suppressed small.

### (5) Power generation efficiency enhancement

Further, if the size of the vehicle use AC generator is unchanged and heavy wires are used for the stator winding 415 while reducing number of turns thereof, the stator copper loss can be reduced while keeping the output characteristic thereof unchanged in comparison with a usual structure, thereby, the power generator efficiency can be realized.

### (6) Prevention of belt life time shortening

Since the rpm of the vehicle use AC generator can be increased without increasing the engine rpm, when the rotor 401 is rotated at a same high rpm, the circumferential speed of the belt can be reduced in comparison with a usual vehicle use AC generator, thereby, a possible life time shortening of the belt due to high speed rotation of the rotor 401 can be prevented.

Further, in the present embodiment, since the rotor 401 is rotated in a high speed, the cantilevered claw portions 407A and 407B in the claw shaped magnetic poles 405A and 405B can be risen up to the outside in the radial direction (in Fig. 13 in up and down sides) due to centrifugal force. In the above, no mechanical reinforcing structure for preventing the claw portions 407A and 407B from rising up was specifically explained.

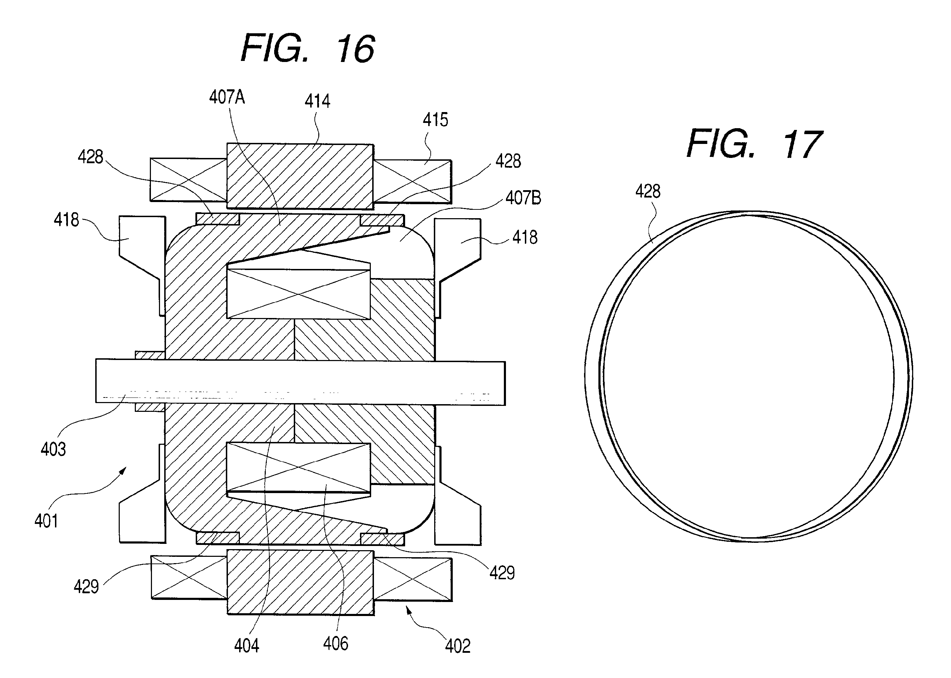

Fig. 16 is a cross sectional view of a major part (the rotor 401 and the stator 402) of a modification of the fifth embodiment vehicle use AC generator of the present invention in which the rotor 401 is provided with a reinforcing ring 428 for mechanical reinforcement and Fig. 17 is a perspective view showing an entire structure of the reinforcing ring 428, and the same and similar parts in Fig. 16 as those in Fig. 13 are designated by the same reference numerals and the explanation thereof is omitted.

In the present modification as shown in Figs. 16 and 17, steps 429 are provided at both end portions in axial direction (in Fig. 16 in right and left direction) of the rotor 401 on the respective claw portions 407A and 407B. Into the steps 429 the respective reinforcing rings 428 are fitted and is secured by such as welding, and connect respective top portions and root portions (curved portions) of the adjacent claw portions 407A and 407B. As a material for the reinforcing ring 428 a non magnetic material with a good corrosion preventing property such as stainless steel and titanium is preferable, and as a material for the claw shaped magnetic poles 405A and 405B (including the yoke when the rotor is constituted in a so called three pieces structure having a divided yoke) a magnetic material having a large tensile strength such as welding structure use weather resistant hot pressed steel SMA 570 in JIS (having tensile strength of 570-720 (N/mm²)) and equivalent thereof are preferable. Other constitutions of the modification are substantially the same as those shown in Fig. 13.

Even in the present modification, the same advantages as obtained in the fifth embodiment vehicle use AC generator of the present invention can be obtained and in addition the rising up of the claw portions 407A and 407B can be prevented even if the rotor 401 is rotated in a high speed.

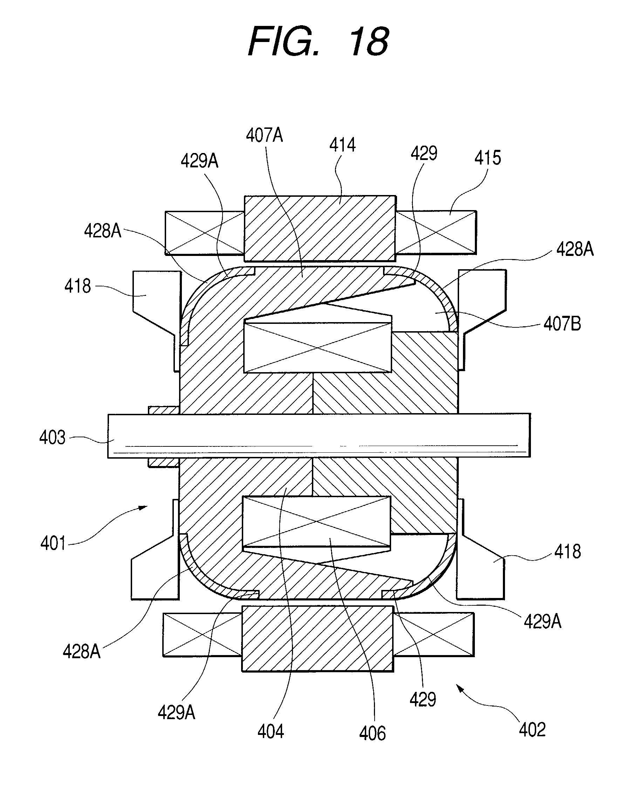

Fig. 18 is a cross sectional view of a major part (the rotor 401 and the stator 402) of another modification of the fifth embodiment vehicle use AC generator of the present invention in which the rotor 401 is provided with reinforcing rings 428A for mechanical reinforcement, and the same and similar parts in Fig. 18 as those in Fig. 13 are designated by the same reference numerals and the explanation thereof is omitted.

In the modification as shown in Fig. 18, at the top portions of the respective claw portions 407A and 407B the steps 429 as in the previous modification are provided, and at the root portions (the curved portions) of the respective claw portions 407A and 407B step portions 429A which follow along the curved face are provided. The locuses of these step portions 429 and 429A in circumferential direction of the rotor 401 are overlapped each other. Like manner on these step portions 429 and 429A respective reinforcing rings 428A are fitted and are secured by welding, and the respective top portions and root portions (curved portions) of the adjacent claw portions 407A and 407B are connected. Namely, these reinforcing rings 428A are provided at both end portions in the axial direction (in Fig. 18 in right and left direction) of the rotor 401, close valleys like space between the top end portions and the root portions of the claw portions 407A and 407B so as to cover the air gap between a plurality of the claw portions 407A and 407B in a stream line shape, and are formed in a semispherical shape (in other words a cup shape) of which center portion is removed. Accordingly, the side face configuration of the rotor 401 seen from the axial direction thereof is a circular shape with no irregularity. Further, as a material for the reinforcing ring 428A likely a non magnetic material with a good corrosion preventing property such as stainless steel and titanium is preferable, and other constitutions of the modification are substantially the same as those shown in Fig. 13.

Even in the present modification, the same advantages as obtained in the fifth embodiment vehicle use AC generator of the present invention can be obtained and in addition the rising up of the claw portions 407A and 407B can be prevented even if the rotor 401 is rotated in a high speed. Further, according to the present modification, stirring of air flow (including turbulence) produced by the cooling fans 418 by the claw shaped magnetic poles 405A and 405B can be prevented to thereby suppress noise generation.

Hereinabove, the present invention has been explained with reference to the air cooling type vehicle use AC generator provided with the cooling fans 418, however, the structure with two shaft and with the reinforcing ring as has been explained hitherto, of course, can be applicable to a water cooling type vehicle use AC generator.

Fig. 19 shows a cross sectional view showing an entire structure of still another modification of the fifth embodiment in which the two shaft structure is applied to the water cooling type vehicle use AC generator. Further, the same or equivalent portions in Fig. 19 as these in Fig. 13 are designated by the same reference numerals and the explanation thereof is omitted.

In Fig. 19, the cooling promotion portion 430 is provided for promoting cooling of the rotor 401 and is constituted by a cup shaped disk 431 provided at the side of the rotor 401 and a heat conductive portion 432 which absorbs heat from the disk 431.

Further, in the present modification, the portion corresponding to the end bracket 408B is constituted by fasting a rear bracket 408Bb to a jacket 408Ba by a bolt, water passages 433 and 434 are provided in the jacket 408Ba and leakage of cooling water flowing through the water passage 433 is prevented by a rear plate 435. Namely, the heat from the disk 431 flowing in via the heat conductive portion 432 to the jacket 408Ba is transferred to the cooling water flowing through the water passages 433 and 434 to thereby cool the rotor 401. Further, the cooling water flowing through the water passage 433 also cools the stator 402 and the cooling water flowing through the water passage 434 also cools the rectifier circuit 416. The other constitution of the present modification are substantially the same as those in Fig. 13 and with the present modification the same advantages as those obtained in Fig. 13 embodiment can be obtained.

Still further, in the above, the present invention has been explained with reference to the speed increasing mechanism in which the drive force transmission shaft 419 and the rotary shaft 403 of the rotor 401 are engaged and coupled by the gears 410 and 424, however, the drive force transmission shaft 419 and the rotary shaft 403 can be coupled such as by a belt and a metallic chain and the same advantages can be likely obtained with these modified measures.

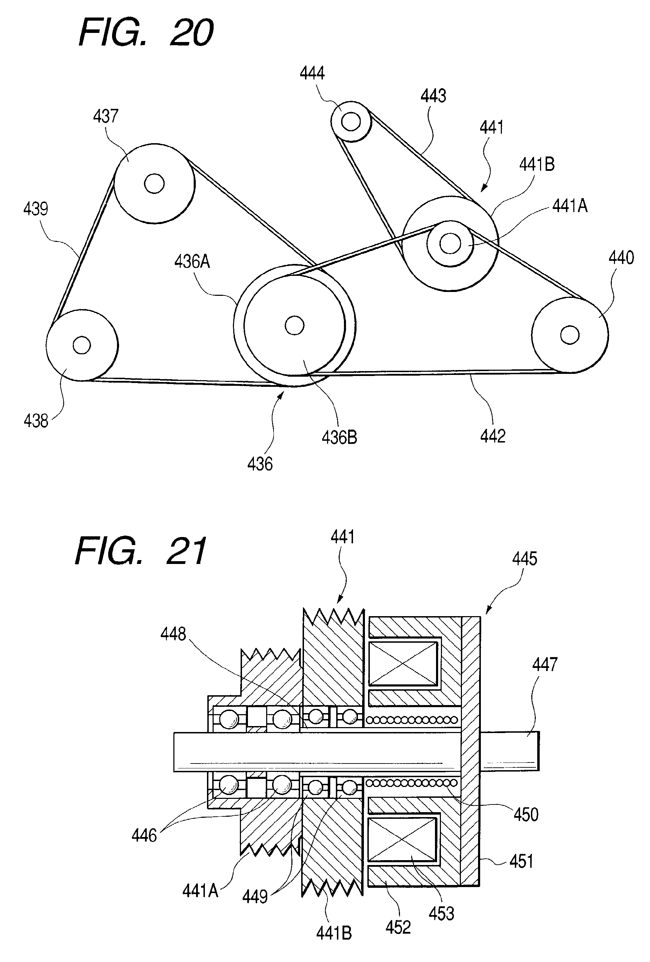

A first embodiment of a drive force transmission system for a vehicle use AC generator of the present invention will be explained with reference to Figs. 20 and 21.

The present embodiment shows a speed increasing system for a vehicle use AC generator when no speed increasing mechanism is provided inside a vehicle use AC generator.

Fig. 20 is a schematic diagram showing entire constitution of a drive force transmission system for a vehicle use AC generator representing a first embodiment of the present invention.

In Fig. 20, a crank pulley 436 provided at the engine output shaft (not shown) is formed in two stage structure including a first pulley 436A and a second pulley 436B having a smaller diameter as that of the first pulley 436A. The first pulley 436A is connected via a first belt 439 to a water pump pulley 437 of a water pump (not shown) for circulating engine cooling water and requiring continuous operation and a power steering pump pulley 438 of a power steering pump (not shown). Further, the second pulley 436B is connected via a second belt 442 to an air conditioner pulley 440 for driving an air conditioner (not shown) which is preferably permitted to be driven intermittently and an idler pulley 441.

The idler pulley 441 is provided with a first pulley 441A and a second pulley 441B having a larger diameter than that of the first pulley 441A, and the second belt 442 is connected to the first pulley 441A. Further, the second pulley 441B is connected via a third belt 443, for example, to a generator pulley of a vehicle use AC generator of a common single shaft structure and a part of the rotational energy is converted into an electrical energy. Further, the connecting condition of the second pulley 441B with respect to the first pulley 441A can be decoupled by an electromagnetic clutch 445 which will be explained later.

With the above structure, when the crank pulley 436 of the engine rotates, all of the pulleys as shown in Fig. 20 are designed to be rotated. Further, the outer diameters of the respective pulleys 437, 438, 440 and 441A connected to the crank pulley 336 are constituted to be smaller than that of the crank pulley 336 based on the above explained design limitation so that the respective pulleys are rotated, for example, after being speed increased at an rpm below 3 times of the rpm of the crank pulley 436.

In this instance, the pulley ratio (speed increasing ratio) of the first pulley 441A in the idler pulley 441 and the second pulley 336B in the crank pulley 336 is set according to the above mentioned design limitation so that the idler pulley 441 is rotated, for example, after being speed increased at an rpm of about 2-3 times of the crank pulley 336. Further, the pulley ratio of the second pulley 441B in the idler pulley 441 and the generator pulley 444 provided at the rotary shaft of the vehicle use AC generator is set so that the generator pulley 444 is rotated, for example, after being speed increased at an rpm of about 2 times of the idler pulley 441. Namely, in such instance, the generator pulley 444 is designed so as to be rotated at an rpm of about 4-6 times (about 2 time as usual) of the engine rpm.

Now, the idler pulley 441 will be explained with reference to Fig. 21 which shows a detailed structure thereof in cross section.

In Fig. 21, the first pulley 441A in the idler pulley 441 is provided via bearings 446 so as to permit rotation with respect to stationary shaft 447 secured to such as an engine block provided, for example, within an engine trunks room of an automobile. The second pulley 441B in the pulley 441 is provided at one side (in Fig. 21 right side) in the axial direction of the first pulley 441A, and is provided via a slide bearing 448 and a bearing 449 so as to permit sliding in the axial direction (in Fig. 21 in right and left direction) and rotation with respect to the stationary shaft 447. Further, the second pulley 441B is constituted by a magnetic body.

Further, the electromagnetic clutch 445 is provided at one side in the axial direction (in Fig. 21 right side) of the second pulley 441B, and is constituted by a coupling spring 450 loosely inserted into the stationary shaft 447, an attachment plate 451 secured to the stationary shaft 447, for example, such as by welding, a yoke 452 constituted by a magnetic body and fixedly attached to the attachment plate 451 and an excitation winding 453 wound inside the yoke 452.

Namely, when no current flows through the excitation winding 453, since the yoke 452 is not magnetized, the second pulley 441B is pushed onto the first pulley 441A by the spring force of the coupling spring 450, and is rotated together with the first pulley 441A through the friction therewith so as to transmit the rotation thereof to the generator pulley 444 of the vehicle use AC generator. On the other hand, when a current is caused to flow through the excitation winding 453, the yoke 452 is magnetized and through the magnetizing force the coupling spring 450 is compressed and the second pulley 441B is attracted to the yoke 452, thereby, the second pulley 441B is decoupled from the first pulley 441A to render the generator pulley 444 in non-rotating condition and to interrupt power generation of the vehicle use AC generator. Namely, the connecting condition of the first and second pulleys 441A and 441B is designed to be mechanically decoupled by the electromagnetic clutch 445.

Further, in the present embodiment, although not illustrated so as to avoid complexity, it is preferable to provide such electromagnetic clutch for the air conditioner pulley 440 so as to permit the intermittent operation.

Further, ON/OFF of the electromagnetic clutch 445 (namely, current conduction ON/OFF to the excitation winding 452) is designed to be controlled by command signals from a control unit provided, for example, within the engine trunk room. Likely, when an electromagnetic clutch is provided for the air conditioner pulley 440, it is sufficient if the electromagnetic clutch is designed also to be controlled by command signals from the control unit.

The electromagnetic clutch 445 constitutes a clutch which couples and decouples the first and second pulleys as defined in the appended claim.

As has been mentioned above, a pulley provided at the rotary shaft of the rotor of a vehicle use AC generator is usually directly coupled such as by a belt with a crank pulley provided at the engine output shaft, and because of the above referred to designing limitation the rpm of the rotor is limited at about 2-3 times at most of the engine rpm.

In the present embodiment, since the rpm of the engine output shaft is transmitted to the generator pulley 444 (namely to the rotary shaft of the rotor provided for the vehicle use AC generator) after being speed-increased via the idler pulley 441, the rpm of the engine output shaft is once increased when being transmitted to the idler pulley 441 and is further transmitted to the shaft of the generator pulley 444 after being speed increased. In such instance, so long as the pulley ratio of the crank pulley 436 provided at the engine output shaft (strictly, the second pulley 436B) and the idler pulley 441 (strictly the first pulley 441A) is, for example, set so that the idler pulley 441 is rotated after being speed increased at an rpm of about 2-3 times of the engine rpm, the above mentioned design requirement limitations such as the allowable speed of the belt and the allowable outer diameters of the respective pulleys are fulfilled. In such instance, likely under these design requirement limitations when the pulley ratio of the idler pulley 441 (strictly the second pulley 441B) and the generator pulley 444 of the vehicle use AC generator is, for example, set so that the generator pulley 444 is rotated after being speed increased at about 2 times of the idler pulley 441, the rotor provided at the vehicle use AC generator can be rotated at an rpm of about 4-6 times (two times of usual one) of the engine rpm.

Thereby, according to the present embodiment, for example, if a same output is required, the rotor can be rotated at further higher rpm than the rpm which is 2-3 times of the usual engine rpm, for example, at an rpm of about 4-6 times of the engine rpm, thus, for example, the size of the magnetic circuit can be reduced correspondingly, as a result, the size of the main body of the vehicle use AC generator can be reduced as a whole.

On the other hand, if the size of the vehicle use AC generator is unchanged and the rotor is rotated at further higher rpm than the rpm which is 2-3 times of the usual engine rpm, for example, at an rpm of about 4-6 times of the engine rpm, a vehicle use AC generator with a higher output can be obtained even under the same engine rpm in comparison with the usual vehicle use AC generator.

More specifically, when it is set that the rotor of the vehicle use AC generator is rotated, for example, at an rpm of about 4-6 times of the engine rpm and the idling rpm of the engine is assumed, for example, at 700 rpm, the rotor can keep an rpm of about 2,800-4,200 rpm even during the engine idling, thereby, a sufficiently large voltage can be outputted.

Further, if the rotor of a vehicle use AC generator is rotated at about 2,000 rpm, a sufficient power can be generally generated. According to the present embodiment, it is sufficient if the engine is rotated at about 330-500 rpm which is effective for reducing the idling rpm of an automobile in view of a environmental protection for suppressing such as air pollution and global warming phenomenon.

Since the rpm of the vehicle use AC generator can be increased without increasing the engine rpm, a possible life time shortening of the belt due to high speed rotation of the vehicle use AC generator can be prevented.

Further, through the provision of the electromagnetic clutch 445 the transmission of the rotation to the vehicle use AC generator (including the air conditioner when an electromagnetic clutch is provided for the air conditioner pulley 440) can be decoupled, a possible load to the engine can be reduced, thereby, advantages of such as noise reduction and efficiency enhancement can be achieved.

Further, since the electromagnetic clutch 445 is provided for coupling and decoupling the rotation transmission from the first pulley 441A to the second pulley 441B in the idler pulley 441, ON/OFF of the vehicle use AC generator can be switched freely. Thereby, for example, when the rpm of the vehicle use AC generator rises high, if the rotation transmission is decoupled or when an automobile is being accelerated, if a load to the vehicle use AC generator is decoupled, a feeling of a driver from the engine idling rotation to the starting of the automobile can be enhanced. Still further, for example, by decoupling a load to the vehicle use AC generator at the time of acceleration of an automobile and interrupting power generation thereby, an acceleration performance can be enhanced and noises can be reduced, and during deceleration the rotation is transmitted to the vehicle use AC generator and a part of kinetic energy can be converted into an electric energy, which effectively contributes to energy management for the battery.

Further, in the present embodiment, the electromagnetic clutch 445 was exemplified as a measure for coupling and decoupling the rotation transmission from the first pulley 441A to the second pulley 441B in the idler pulley 441, the present invention is not limited thereto, for example, a centrifugal clutch which decouples the connection between the first and second pulleys 441A and 441B by a centrifugal force during high speed rotation and a hydraulic pressure clutch can be used, further, so long as the engine rpm is transmitted to the vehicle use AC generator after being further speed increased as usual, the electromagnetic clutch 445 is not necessarily required for the idler pulley 441, and if the idler pulley is constituted by integrating the first and second pulleys 441A and 441B, the same advantage of rpm increase can be obtained.

Further, although not illustrated so as to avoid complexity, even in the present embodiment, it is preferable to provide the reinforcing rings 328 or 328A and to reinforce mechanical strength of the rotor provided for the vehicle use AC generator because the vehicle use AC generator is rotated in a high speed in comparison with the usual speed.

Like the fifth embodiment vehicle use AC generator, the present embodiment can, of course, be applied such as to a vehicle use AC generator using permanent magnets, an air cooling type vehicle use AC generator and a water cooling type vehicle use AC generator.

Hereinabove, because of the design requirement limitations, all of the pulley ratio between respective pulleys in a range of about 2-3 times have been explained, however, for example, when a belt made of a material having a further high speed withstanding property is used and the allowable design value can be modified, the present invention is not strictly limited to the above range. Further, in the present invention, although the gear ratio of the gears 410 and 424 is set in view of that the rotation of the drive force transmission shaft 419 is transmitted to the rotor 401 after being speed increased at about 2 times, however, there are no problems with regard to design and safety, a further higher gear ratio can be used.

The above explained embodiments and modifications thereof can be, for example, applied such as to a brushless type vehicle use AC generator in which the field winding is stationary with the same advantages as above.

According to one aspect of the present invention, since the drive force transmission shaft which transmits a drive force to the rotary shaft of the rotor after speed increasing the rpm is provided independent from the rotary shaft of the rotor, while satisfying limitations with regard to design requirements, when connecting the drive power transmission shaft with an engine output shaft via a belt, such as an allowable speed of the belt and an allowable pulley outer diameter, by setting a speed increasing ratio between a crank pulley provided at the engine output shaft and the generator pulley provided at the drive power transmission shaft in about 2-3 times, the rotor can be rotated by further speed increasing the rpm of the drive force transmission shaft. Namely, as has been explained above, the rotor which is usually rotated at an rpm of about 2-3 times of the engine output shaft can further be speed-increased.

Further, as the generator pulley provided at the drive force transmission shaft an equivalent one as the generator pulley provided at the rotary shaft of the rotor in a usual vehicle use AC generator is sufficient, therefore, in contrast to the above conventional art in which the outer diameter of the generator pulley is enlarged because of the building-in planetary gear mechanism and electromagnetic clutch, a possible size increase as a whole of the generator because of the provision of the speed increasing mechanism and a possible manufacturing cost increase because of number of parts increase can be suppressed.

Thereby, according to the present invention, for example, if a same output is required, the rotor can be rotated at further higher rpm than the rpm which is 2-3 times of the usual engine rpm, thus, for example, the size of the magnetic circuit can be reduced correspondingly, as a result, the size of the main body of the vehicle use AC generator can be reduced as a whole.

According to another aspect of the present invention, since the rpm of the engine output shaft is transmitted to the rotary shaft of the rotor after being speed-increased via the idler pulley, the rpm of the engine output shaft is once increased when being transmitted to the idler pulley and is further transmitted to the rotary shaft of the rotor after being speed increased. In such instance, when the speed increasing ratio of the crank pulley provided at the engine output shaft and the idler pulley is, for example, set at about 2-3 times, the above mentioned design requirement limitations such as the allowable speed of the belt and the allowable outer diameters of the respective pulleys are fulfilled and likely when the pulley ratio of the idler pulley and the generator pulley is, for example, set so that the rotation of the idler pulley is transmitted to the generator pulley provided at the rotary shaft of the rotor after being speed increased, for example, if a same output is required, the rotor can be rotated at further higher rpm than the rpm which is 2-3 times of the usual engine rpm, thus, for example, the size of the magnetic circuit can be reduced correspondingly, as a result, the size of the main body of the vehicle use AC generator can be reduced as a whole.

## Claims

1. In a vehicle use AC generation system which includes a vehicle use AC generator (100) coupled to a crank pulley shaft (302) of an engine (300) via a pulley (1), the vehicle use AC generator (100) being provided with a rotor (15) having magnetic poles and a field winding (19) for magnetizing the magnetic poles, a stator (402) which is disposed being spaced apart with a predetermined gap with respect to the rotor (15) and has a stator winding (415) for generating an AC voltage through magnetization of the magnetic poles, a first shaft (2) to which the pulley (1) is provided and a second shaft (6) integral with the rotor (15) wherein the first shaft (2) to which the pulley (1) is provided is disposed within the side face of the vehicle use AC generator (100) and at equivalent position with the second shaft (6) when seen from the crank pulley shaft (302) or rather at the side of the crank pulley shaft (302) from the second shaft (6) and the first shaft (2) to which the pulley (1) is provided and the second shaft (6) are coupled via a motive force transmission mechanism including a transmission for increasing speed at the side of the pulley (1).

2. In a vehicle use AC generation system which includes a vehicle use AC generator coupled to a crank pulley shaft of an engine via a pulley, the vehicle use AC generator being provided with a rotor having magnetic poles and a field winding for magnetizing the magnetic poles, a stator which is disposed being spaced apart with a predetermined gap with respect to the rotor and has a stator winding for generating an AC voltage through magnetization of the magnetic poles, a shaft integral with the rotor,a motive force transmission mechanism including a transmission for increasing speed at the side of the pulley and a liquid cooling type cooling means for cooling the motive force transmission mechanism, wherein the shaft integral with the rotor and the pulley are coupled via the motive force transmission mechanism.

3. In a vehicle use AC generation system which includes a vehicle use AC generator coupled to a crank pulley shaft of an engine via a pulley, the vehicle use AC generator being provided with a rotor having magnetic poles and a field winding for magnetizing the magnetic poles, a stator which is disposed being spaced apart with a predetermined gap with respect to the rotor and has a stator winding for generating an AC voltage through magnetization of the magnetic poles, a first shaft to which the pulley is provided, a second shaft integral with the rotor, a motive force transmission mechanism including a transmission for increasing speed at the side of pulley and a bracket provided with the motive force transmission mechanism, wherein the bracket being provided with a gear casing and a stationary portion for the engine in the motive force transmission mechanism, the first shaft to which the pulley is provided is disposed within the bracket and at equivalent position with the second shaft when seen from the crank pulley shaft or rather at the side of the engine from the second shaft and the first shaft to which the pulley is provided and the second shaft are coupled via the motive force transmission mechanism provided at the bracket.

4. A vehicle use AC generation system of claim 1, wherein the transmission is constituted in such a manner that an rpm ratio of the second shaft and the engine crank pulley shaft assumes in a range of 4-6 times.

5. A vehicle use AC generation system of claim 2, wherein the transmission is constituted in such a manner that an rpm ratio of the second shaft and the engine crank pulley shaft assumes in a range of 4-6 times.

6. A vehicle use AC generation system of claim 3, wherein the transmission is constituted in such a manner that an rpm ratio of the second shaft and the engine crank pulley shaft assumes in a range of 4-6 times.

7. A vehicle use AC generation system of claim 1, wherein a cooling water circulating passage for the engine and a cooling water circulating passage for the vehicle use AC generator are provided in parallel with respect to a common radiator.

8. A vehicle use AC generation system of claim 2, wherein a cooling water circulating passage for the engine and a cooling water circulating passage for the vehicle use AC generator are provided in parallel with respect to a common radiator.

9. A vehicle use AC generation system of claim 3, wherein a cooling water circulating passage for the engine and a cooling water circulating passage for the vehicle use AC generator are provided in parallel with respect to a common radiator.

10. A vehicle use AC generation system of claim 1, wherein the vehicle use AC generator includes a bracket provided with the motive force transmission mechanism and a liquid cooling type cooling means and the bracket is provided with a gear casing and a stationary portion for the engine in the motive force transmission mechanism.

11. A vehicle use AC generation system of claim 2, wherein the vehicle use AC generator includes a bracket provided with the motive force transmission mechanism and the liquid cooling type cooling means and the bracket is provided with a gear casing and a stationary portion for the engine in the motive force transmission mechanism.

12. A vehicle use AC generation system of claim 3, wherein a pair of vehicle use AC generator stationary portions are provided at positions which sandwich both sides of the gear casing portion in the bracket.

13. A vehicle use AC generation system of claim 10, wherein a pair of vehicle use AC generator stationary portions are provided at positions which sandwich both sides of the gear casing portion in the bracket.

14. A vehicle use AC generation system of claim 11, wherein a pair of vehicle use AC generator stationary portions are provided at positions which sandwich both sides of the gear casing portion in the bracket.

15. In a vehicle use AC generator coupled to a crank pulley shaft of an engine via a pulley, the vehicle use AC generator being provided with a rotor having magnetic poles and a field winding for magnetizing the magnetic poles, a stator which is disposed being spaced apart with a predetermined gap with respect to the rotor and has a stator winding for generating an AC voltage through magnetization of the magnetic poles, a first shaft to which the pulley is provided, a second shaft integral with the rotor, a motive force transmission mechanism including a transmission for increasing speed at the side of pulley and a bracket provided with the motive force transmission mechanism, wherein the bracket being provided with a gear casing and a stationary portion for the engine in the motive force transmission mechanism, the first shaft to which the pulley is provided is disposed within the bracket and at equivalent position with the second shaft when seen from the crank pulley shaft or rather at the side of the engine from the second shaft and the first shaft to which the pulley is provided and the second shaft are coupled via the motive force transmission mechanism provided at the bracket.

16. A vehicle use AC generator of claim 15, further being provided with a liquid cooling type cooling means for cooling the motive force transmission mechanism.

17. A vehicle use AC generator of claim 16, wherein in the liquid cooling type cooling means a jacket including a water passage for cooling the stator and the transmission is formed around the outer circumferential portion of the stator.

18. In a vehicle use AC generator including a rotor constituted by a pair of opposingly disposed claw shaped magnetic poles at each of top portions of which a plurality of claw portions are formed and a field winding for magnetizing the claw shaped magnetic poles and being secured to a rotor shaft, permanent magnets for auxiliary excitation disposed between the claw shaped magnetic poles in the rotor, a stator which is disposed being spaced apart with a predetermined gap with respect to the rotor and has a stator winding for generating an AC voltage through magnetization of the magnetic poles, a liquid cooling type cooling means for cooling heat generation from the stator and a bracket, wherein a pulley shaft provided with a pulley is provided independent from the rotor shaft, and the pulley shaft is elongated in the axial direction exceeding the bracket.

19. In a vehicle use AC generator including a rotor constituted by a pair of opposingly disposed claw shaped magnetic poles at each of top portions of which a plurality of claw portions are formed and a field winding for magnetizing the claw shaped magnetic poles and being secured to a rotor shaft, permanent magnets for auxiliary excitation disposed between the claw shaped magnetic poles in the rotor, a stator which is disposed being spaced apart with a predetermined gap with respect to the rotor and has a stator winding for generating an AC voltage through magnetization of the magnetic poles, a liquid cooling type cooling means for cooling heat generation from the stator and a bracket, wherein a pulley shaft provided with a pulley is provided independent from the rotor shaft, the pulley shaft and the rotor shaft are coupled via a transmission provided at the bracket as well as the pulley shaft is elongated in the axial direction exceeding the bracket.

20. A vehicle use AC generator of claim 18, wherein the permanent magnet for auxiliary excitation is accommodated in a permanent magnet holder, and the permanent magnet holder is inserted through slits provided along the inside of the claw shaped magnetic poles.

21. A vehicle use AC generator of claim 19, wherein the permanent magnet for auxiliary excitation is accommodated in a permanent magnet holder, and the permanent magnet holder is inserted through slits provided along the inside of the claw shaped magnetic poles.

22. In a vehicle use AC generator including a rotor constituted by a pair of opposingly disposed claw shaped magnetic poles at each of top portions of which a plurality of claw portions are formed and a field winding for magnetizing the claw shaped magnetic poles and being secured to a rotor shaft, permanent magnets for auxiliary excitation disposed between the claw shaped magnetic poles in the rotor, a stator which is disposed being spaced apart with a predetermined gap with respect to the rotor and has a stator winding for generating an AC voltage through magnetization of the magnetic poles, and a liquid cooling type cooling means for cooling heat generation from the stator, wherein as a material of the rotor a material having a tensile strength of about 500 MPa is used, as the permanent magnet a neodymium magnet is disposed between the claw shaped magnetic poles, a pulley shaft being provided independent from the rotor shaft and being designed to be rotated in the opposite direction from the rotor shaft.

23. A vehicle use AC generator being provided with a rotor including a pair of claw shaped magnetic poles and a field winding wound radially inside with respect to the pair of claw shaped magnetic poles and a stator in which a stator winding is wound on a stator iron core and being further provided with a drive force transmission shaft which is provided independent from a rotary shaft of the rotor and transmits a drive force to the rotary shaft after increasing the rpm.

24. A vehicle use AC generator of claim 23, wherein the motive force transmission shaft is coupled via a speed increasing gear series to the rotary shaft of the rotor.

25. A vehicle use AC generator of claim 24, wherein the speed increasing gear series is disposed at one end in the longitudinal direction of the rotary shaft of the rotor.

26. A vehicle use AC generator of claim 24, wherein a speed increasing ratio of the speed increasing gear series is set at about 2 times.

27. A vehicle use AC generator of claim 25, wherein a speed increasing ratio of the speed increasing gear series is set at about 2 times.

28. A vehicle use AC generator of claim 23, wherein a reinforcing ring is further provided which connects a plurality of claw portions provided for each of the pair of claw shaped magnetic poles in the circumferential direction of the rotor.

29. A vehicle use AC generator of claim 24, wherein a reinforcing ring is further provided which connects a plurality of claw portions provided for each of the pair of claw shaped magnetic poles in the circumferential direction of the rotor.

30. A vehicle use AC generator of claim 25, wherein a reinforcing ring is further provided which connects a plurality of claw portions provided for each of the pair of claw shaped magnetic poles in the circumferential direction of the rotor.

31. A vehicle use AC generator of claim 26, wherein a reinforcing ring is further provided which connects a plurality of claw portions provided for each of the pair of claw shaped magnetic poles in the circumferential direction of the rotor.

32. A vehicle use AC generator of claim 27, wherein a reinforcing ring is further provided which connects a plurality of claw portions provided for each of the pair of claw shaped magnetic poles in the circumferential direction of the rotor.

33. A vehicle use AC generator of claim 28, wherein the reinforcing ring is provided at end portions in the axial direction of the rotor and is formed in a semispherical shape so as to cover the space between the plurality of claw portions.

34. A vehicle use AC generator of claim 29, wherein the reinforcing ring is provided at end portions in the axial direction of the rotor and is formed in a semispherical shape so as to cover the space between the plurality of claw portions.

35. A vehicle use AC generator of claim 30, wherein the reinforcing ring is provided at end portions in the axial direction of the rotor and is formed in a semispherical shape so as to cover the space between the plurality of claw portions.

36. A vehicle use AC generator of claim 31, wherein the reinforcing ring is provided at end portions in the axial direction of the rotor and is formed in a semispherical shape so as to cover the space between the plurality of claw portions.

37. A vehicle use AC generator of claim 32, wherein the reinforcing ring is provided at end portions in the axial direction of the rotor and is formed in a semispherical shape so as to cover the space between the plurality of claw portions.

38. A vehicle use AC generator use drive transmission system for transmitting a drive force of an engine via a belt to a vehicle use AC generator which is provided with a rotor including a pair of claw shaped magnetic poles and a field winding wound radially inside with respect to the pair of claw shaped magnetic poles and a stator in which a stator winding is wound on a stator iron core being provided with an idler pulley which transmits the rpm of an output shaft of the engine to a rotary shaft of the rotor after speed increasing thereof.

39. A vehicle use AC generator use drive force transmission system of claim 38, wherein the idler pulley is at least provided with a first pulley connected to the output shaft of the engine and a second pulley connected to the rotary shaft of the rotor and having a different diameter as that of the first pulley and further a clutch is provided which couples and decouples of the connection between the first pulley and the second pulley.
